(19) Europäisches Patentamt
European Patent Office
Office européen des brevets

(11) **EP 2 874 856 B1**

(12) **EUROPÄISCHE PATENTSCHRIFT**

(45) Veröffentlichungstag und Bekanntmachung des Hinweises auf die Patenterteilung:
**10.08.2016   Patentblatt 2016/32**

(21) Anmeldenummer: **13730551.2**

(22) Anmeldetag: **19.06.2013**

(51) Int Cl.:
*B60W 30/14* (2006.01)     *B60W 30/18* (2012.01)

(86) Internationale Anmeldenummer:
**PCT/EP2013/062748**

(87) Internationale Veröffentlichungsnummer:
**WO 2014/016058 (30.01.2014 Gazette 2014/05)**

(54) **VERFAHREN ZUM VERÄNDERN EINER FAHRSTRATEGIE FÜR EIN FAHRZEUG UND FAHRZEUGSTEUERGERÄT**

METHOD FOR CHANGING A DRIVING STRATEGY FOR A VEHICLE AND VEHICLE CONTROL DEVICE

PROCÉDÉ DE MODIFICATION D'UNE STRATÉGIE DE CONDUITE POUR UN VÉHICULE ET DISPOSITIF DE CONDUITE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2012   DE 102012014468**

(43) Veröffentlichungstag der Anmeldung:
**27.05.2015   Patentblatt 2015/22**

(73) Patentinhaber: **Volkswagen Aktiengesellschaft 38440 Wolfsburg (DE)**

(72) Erfinder:
• **DORNIEDEN, Bernd**
  **38110 Braunschweig (DE)**
• **JUNGE, Lutz**
  **38106 Braunschweig (DE)**

(56) Entgegenhaltungen:
**EP-A1- 2 476 597        DE-A1-102009 021 019**
**DE-A1-102009 040 682**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich sich auf ein Verfahren nach dem Oberbergriff des Anspruchs 1 zum Verändern einer Fahrstrategie für ein Fahrzeug und auf ein Fahrzeugsteuergerät nach dem Oberbegriff des Anspruchs 14 für ein Fahrzeug.

Im Bereich der Kraftfahrzeugtechnik wird seit langen Jahren aus ökonomischen, aber auch aus ökologischen Gründen versucht, eine Effizienz zu steigern, mit der ein Kraftfahrzeug bewegt werden kann. Neben direkten Maßnahmen, welche geeignet sind, um Widerstände im Kraftfahrzeug zu verringern und andere, seinen Verbrauch senkende Maßnahmen umzusetzen, werden auch Systeme eingesetzt, mit deren Hilfe eine Fahrstrategie bestimmbar ist, um beispielsweise eine anstehende Fahrstrecke mit möglichst geringem Kraftstoffverbrauch zurückzulegen. Hierbei werden auf Daten der betreffenden Fahrstrecke zurückgegriffen, zu denen beispielsweise Topografiedaten zählen können.

So bezieht sich beispielsweise die DE 10 2009 021 019 A1 auf ein Verfahren zum Generieren einer Fahrstrategie. Auch die DE 10 2009 057 393 A1 bezieht sich auf ein Verfahren zum Steuern eines Betriebs eines Fahrzeugs. Die gattungsbildende DE 10 2009 040 682 A1 bezieht sich auf ein Verfahren zur Steuerung einer Geschwindigkeitsregelanlage eines Fahrzeugs.

Bei solchen Verfahren werden häufig Streckenabschnitte definiert und entsprechend verbrauchsoptimierte Fixpunkte bzw. Kurven vorgegeben. Diese Verfahren basieren jedoch häufig auf idealisierten Zuständen, die das reale Verhalten des Fahrzeugs nicht berücksichtigen, wodurch beispielsweise eine theoretisch mögliche Energieeffizienz beim Fahren nicht erreicht wird. Darüber hinaus stoßen gegebenenfalls solche Systeme bei einem Kunden bzw. einem Fahrer auf Ablehnung, wenn beispielsweise aufgrund von Störgrößen von einem ideal angenommen Zustand eines Manövers abgewichen wird und so das betreffende Manöver beispielsweise bereits deutlich vor dem eigentlichen Ziel, also beispielsweise einem Ortseingangsschild, beendet ist. Hierbei kann es gegebenenfalls möglich sein, dass das Fahrzeug zum Erreichen des eigentlichen Ziels erneut beschleunigen muss und somit in diesem letzten Abschnitt nicht in dem Maße energieeffizient fährt, wie dies der Fahrer eigentlich beabsichtigt hat. Dies kann beispielsweise aufgrund von Gegenwind im Rahmen eines Ausrollvorgangs geschehen, wodurch beispielsweise bereits 200 m vor einem Ortsschild der betreffende Ausrollvorgang beendet ist und das Fahrzeug noch bis zu dem Ortsschild mit Motor weiter fahren muss.

Es besteht daher ein Bedarf, eine Verbesserung einer Fahrstrategie im Hinblick auf reale Fahrsituationen zu schaffen.

Diesem Bedarf tragen ein Verfahren zum Verändern einer Fahrstrategie gemäß Patentanspruch 1, ein Fahrzeugsteuergerät für ein Fahrzeug gemäß Patentanspruch 14 und ein Programm gemäß Patentanspruch 15 Rechnung.

Ein Verfahren zum Verändern einer Fahrstrategie für ein Fahrzeug, wobei die Fahrstrategie auf wenigstens einer Manöverlinie einer Mehrzahl von Manöverlinien basiert, und wobei die Manöverlinien und die Fahrstrategie eine Abhängigkeit eines Bewegungsparameters als Funktion eines Distanzparameters aufweisen, umfasst ein Vergleichen der Fahrstrategie mit einer Bewegung des Fahrzeugs. Es umfasst ferner ein Korrigieren wenigstens einer Manöverlinie der Mehrzahl von Manöverlinien basierend auf dem Vergleich zwischen der Bewegung des Fahrzeugs und der Fahrstrategie sowie ein Verändern der Fahrstrategie auf Basis der Mehrzahl von Manöverlinien nach dem Korrigieren wenigstens einer der Manöverlinien der Mehrzahl von Manöverlinien, wenn die Bewegung des Fahrzeugs und die Fahrstrategie eine vorbestimmte Bedingung erfüllen. Bei einem Ausführungsbeispiel werden so das Korrigieren der wenigstens einen Manöverlinie und das Verändern der Fahrstrategie ausgeführt, wenn die Bewegung des Fahrzeugs und die Fahrstrategie die vorbestimmte Bedingung erfüllen.

Ein Fahrzeugsteuergerät für ein Fahrzeug ist entsprechend ausgebildet, um eine Fahrstrategie mit einer Bewegung des Fahrzeugs zu vergleichen, wobei die Fahrstrategie auf wenigstens einer Manöverlinie einer Mehrzahl von Manöverlinien basiert und wobei die Manöverlinien und die Fahrstrategie eine Abhängigkeit eines Bewegungsparameters als Funktion eines Distanzparameters aufweisen. Das Fahrzeugsteuergerät ist ferner ausgebildet, um wenigstens eine Manöverlinie der Mehrzahl von Manöverlinien basierend auf dem Vergleich zwischen der Bewegung des Fahrzeugs und der Fahrstrategie zu korrigieren und die Fahrstrategie auf Basis der Mehrzahl von Manöverlinien nach dem Korrigieren wenigstens einer der Manöverlinien der Mehrzahl von Manöverlinien zu verändern, wenn die Bewegung des Fahrzeugs und die Fahrstrategie eine vorbestimmte Bedingung erfüllen. Auch hier ist das Fahrzeugsteuergerät bei einem Ausführungsbeispiel derart ausgebildet, dass diese das

Korrigieren der wenigstens einen Manöverlinie und das Verändern der Fahrstrategie ausführt, wenn die Bewegung des Fahrzeugs und die Fahrstrategie die vorbestimmte Bedingung erfüllen.

Ein Ausführungsbeispiel umfasst ferner ein Programm bzw. Computerprogramm mit einem Programmcode zum Durchführen eines Verfahrens gemäß einem Ausführungsbeispiel, wenn der Programmcode auf einem Computer, einem Prozessor oder einer programmierbaren Hardwarekomponente ausgeführt wird. Ein solcher Prozessor, Computer oder eine entsprechende programmierbare Hardwarekomponente kann beispielsweise durch eine oder mehrere Komponenten eines Fahrzeugsteuergeräts gebildet sein.

Ausführungsbeispielen liegt so die Erkenntnis zugrunde, dass eine Verbesserung einer Fahrstrategie im Hinblick auf reale Fahrsituationen dadurch erzielbar ist, dass die Fahrstrategie mit der tatsächlichen Bewegung des Fahrzeugs verglichen wird und bei Bedarf, wenn also die Bewegung des Fahrzeugs und die Fahrstrategie vorbestimmte Bedingung erfüllen, wenigstens eine der Manöverlinien, auf der die Fahrstrategie beruht, korrigiert wird und nach dem Korrigieren der wenigstens einen Manöverlinie die Fahrstrategie verändert wird. Hierdurch ist es also möglich, Abweichungen zwischen der Bewegung des Fahrzeugs und der Fahrstrategie zu erkennen und durch eine Korrektur wenigstens einer Manöverlinie und einer anschließenden Veränderung der Fahrstrategie zu berücksichtigen. Tritt also eine Abweichung zwischen Fahrstrategie und Bewegung des Fahrzeugs auf, kann diese für die weitere Fahrstrategie berücksichtigt werden.

Bei dem Bewegungsparameter kann es sich beispielsweise um eine Geschwindigkeit oder eine Beschleunigung des Fahrzeugs handeln. Ergänzend oder alternativ kann der Distanzparameter eine Strecke oder eine Zeit sein. Die Manöverlinien der Mehrzahl von Manöverlinien können jeweils einem Manöver einer Gruppe von Manövern zugeordnet sein, wobei die Gruppe von Manövern ein Freilaufmanöver, ein Segelmanöver, ein Schubmanöver, ein Bremsmanöver, ein Rekuperationsmanöver, ein Konstantfahrmanöver und ein Beschleunigungsmanöver umfasst. Hierbei müssen bei Ausführungsbeispielen nicht alle genannten Manöver implementiert werden. Ebenso können weitere, beispielsweise ein genanntes Manöver in unterschiedlichen Ausgestaltungen implementiert werden.

Eine Fahrstrategie kann so eine oder mehrere Manöverlinien vollständig oder teilweise umfassen, welche bezogen auf den Distanzparameter vollständig oder teilweise aneinandergereiht werden. Eine Fahrstrategie kann abschnittsweise vollständig oder teilweise mit einer Manöverlinie übereinstimmen.

Optional kann bei einem Verfahren gemäß einem Ausführungsbeispiel das Korrigieren der wenigstens einen Manöverlinie der Mehrzahl von Manöverlinien ein Korrigieren der wenigstens einen Manöverlinie auf Basis wenigstens einer linearen, polygonalen und/oder rationalen Funktion umfassen. So können bei einem Ausführungsbeispiel mithilfe vergleichsweise einfacher numerischer Operationen beispielsweise eine oder mehrere Manöverlinien korrigiert werden, bevor die entsprechende Fahrstrategie verändert wird. Hierdurch kann es möglich sein, ein Ausführungsbeispiel effizient und ressourcenschonend zu implementieren.

Hierbei kann sowohl die Manöverlinie selbst, also der Bewegungsparameter auf Basis der linearen, polygonalen und/oder rationalen Funktion korrigiert werden, es kann jedoch auch ergänzend oder alternativ ein Eingangsparameter der Manöverlinie, also beispielsweise der Distanzparameter, auf Basis einer linearen, polygonalen und/oder rationalen Funktion korrigiert werden. Werden sowohl der Bewegungsparameter als auch ein oder mehrere Eingangsparameter der Manöverlinie mithilfe einer entsprechenden Funktion korrigiert, kann es sich hierbei um unterschiedliche Funktionen jedoch auch um teilweise identische Funktionen handeln.

Eine rationale Funktion ist hierbei durch einen Quotient zweier polygonaler Funktionen gegeben, die sich selbstverständlich unterscheiden können. Ist die polygonale Funktion im Nenner konstant, handelt es sich bei der rationalen Funktion um eine polygonale Funktion. Verschwinden bei einer polygonalen Funktion alle Glieder bis auf ein lineares Glied und gegebenenfalls ein absolutes Glied, handelt es sich bei einer solchen Funktion um eine lineare Funktion. Verschwindet bei einer solchen linearen Funktion auch das absolute Glied, ist also ein Ausgangswert stets proportional zu seinem Eingangswert, handelt es sich um eine lineare Funktion im strengen Sinn, die jedoch auch zu den linearen Funktionen gehört.

Optional kann bei einem Verfahren gemäß einem Ausführungsbeispiel das Korrigieren der wenigstens einen Manöverlinie der Mehrzahl von Manöverlinien ein Korrigieren der wenigstens einen Manöverlinie auf Basis eines Korrekturfaktors umfassen, der auf einem Unterschied zwischen einer aus der Bewegung des Fahrzeugs abgeleiteten Geschwindigkeit und einer auf Basis der Fahrstrategie bestimmten Geschwindigkeit basiert und/oder auf einem Unterschied zwischen einer aus der Bewegung des Fahrzeugs abgeleiteten Geschwindigkeitsdifferenz und einer auf Basis der Fahrstrategie bestimmten Geschwindigkeitsdifferenz basiert. Alternativ oder ergänzend kann der oder ein weiterer Korrekturfaktor auch auf einem Verhältnis aus der aus der Bewegung des Fahrzeugs abgeleiteten Geschwindigkeit und der auf Basis der Fahrstrategie bestimmten Geschwindigkeit bzw. einem Verhältnis der entsprechenden Geschwindigkeitsdifferenzen basieren. Hierdurch kann es möglich sein, das Korrigieren der wenigstens einen Manöverlinie effizienter und ressourcenschonend durchzuführen, indem diese auf Basis des Korrekturfaktors korrigiert wird.

So kann beispielsweise auf Basis einer der zuvor genannten linearen, polygonalen und/oder rationalen Funktionen die wenigstens eine Manöverlinie dadurch korrigiert werden, dass mithilfe wenigstens einer solchen Funktion in Abhängigkeit des Korrekturfaktors der Bewegungsparameter oder ein Eingangsparameter der Manöverlinie, also beispielsweise der Distanzparameter, verändert wird.

Optional kann bei einem Verfahren gemäß einem Ausführungsbeispiel das Korrigieren der wenigstens einen Manöverlinie der Mehrzahl von Manöverlinien ein Korrigieren der wenigstens einen Manöverlinie unter Berücksichtigung wenigstens eines vorangegangenen Korrigierens wenigstens einer Manöverlinie der Mehrzahl von Manöverlinien umfassen. Hierdurch kann es gegebenenfalls möglich sein, länger anhaltende Störungen, welche zu einer Abweichung zwischen der Fahrstrategie und der Bewegung des Fahrzeugs führen, besser zu berücksichtigen. Hierdurch kann es gegebenenfalls möglich sein, einen Korrekturbedarf bzw. einen Veränderungsbedarf zu reduzieren und damit eine Genauigkeit hinsichtlich der Fahrstrategie zu verbessern.

Zu diesem Zweck kann beispielsweise im Falle einer Implementierung, bei der Korrekturfaktoren verwendet werden, dieser im Rahmen einer Mittlung, beispielsweise einer gewichteten Mittlung aus vorangegangenen Korrekturen berücksichtigt werden.

Optional kann bei einem Verfahren gemäß einem Ausführungsbeispiel die vorbestimmte Bedingung zwischen der Bewegung des Fahrzeugs und der Fahrstrategie erfüllt sein, wenn ein Unterschied zwischen einer aus der Bewegung des Fahrzeugs abgeleiteten Geschwindigkeit und einer auf Basis der Fahrstrategie bestimmten Geschwindigkeit eine vorbestimmte Schwelle übersteigt. Ergänzend oder alternativ kann die vorbestimmte Bedingung auch dann erfüll sein, wenn ein Verhältnis aus der aus der Bewegung abgeleiteten Geschwindigkeit und der auf Basis der Fahrstrategie bestimmten Geschwindigkeit eine vorbestimmte, gegebenenfalls anders definierte Schwelle übersteigt. Hierdurch kann gegebenenfalls ein von einem Benutzer des Fahrzeugs als störend empfundenes zu häufiges Anpassen der Fahrstrategien gegebenenfalls unterbunden werden. So kann insgesamt gegebenenfalls eine als angenehmer empfundene Verbesserung einer Fahrstrategie an reale Fahrsituationen erzielbar sein.

Bei einem solchen Verfahren gemäß einem Ausführungsbeispiel kann die Fahrstrategie derart bestimmt sein, um das Fahrzeug unter Berücksichtigung topografischer Daten an einem vorbestimmten Zielpunkt mit einer vorbestimmten Zielgeschwindigkeit ankommen zu lassen. Die vorbestimmte Schwelle kann hierbei eine Abhängigkeit von einer Distanz zwischen dem Fahrzeug und dem vorbestimmten Zielpunkt aufweisen. Auch hierdurch kann gegebenenfalls ein unter realen Bedingungen nicht notwendiges Korrigieren vermeidbar sein. So kann beispielsweise bei einer ersten Distanz, die größer ist als eine zweite Distanz, die vorbestimmte Schwelle einen größeren Wert aufweisen, als bei der zweiten Distanz. Anders ausgedrückt kann beispielsweise je näher der vorbestimmte Zielpunkt rückt, die vorbestimmte Schwelle kleiner werden.

Unabhängig von einer Implementierung einer vorbestimmten Schwelle und einer gegebenenfalls implementierten Abhängigkeit von einer Distanz zwischen dem Fahrzeug und dem vorbestimmten Zielpunkt kann bei einem Ausführungsbeispiel eines Verfahrens optional die Fahrstrategie unter Berücksichtigung topografischer Daten bestimmt werden. Die topografischen Daten können hierbei beispielsweise Information hinsichtlich eines Streckenverlaufs in wenigstens zwei Dimensionen, also beispielsweise in einer Ebene oder einer gekrümmten Fläche, umfassen. Optional können sie jedoch auch Information hinsichtlich einer dritten Dimension umfassen, aus der beispielsweise eine Information hinsichtlich einer Höhe und/oder einer Steigung ableitbar oder direkt entnehmbar sind.

Optional kann bei einem Verfahren gemäß einem Ausführungsbeispiel das Vergleichen ein im Wesentlichen zeitlich kontinuierliches Vergleichen umfassen. Ergänzend oder alternativ hierzu kann das Vergleichen auch ein im Wesentlichen zeitlich periodisches Vergleichen umfassen. Hierdurch kann es gegebenenfalls möglich sein, ein Erfüllen der vorbestimmten Bedingung zwischen der Bewegung des Fahrzeugs und der Fahrstrategie frühzeitig zu erkennen und so eine Stärke eines Korrigierens der wenigstens einen Manöverlinie und des Veränderns der Fahrstrategie zu begrenzen. So kann es gegebenenfalls möglich sein, eine von dem Fahrer des Fahrzeugs als angenehmer empfundene Veränderung der Fahrstrategie an reale Fahrsituationen zu ermöglichen.

Optional kann bei einem Verfahren nach einem Ausführungsbeispiel das Verändern der Fahrstrategie derart erfolgen, um das Fahrzeug an einem vorbestimmten Zielpunkt mit einer vorbestimmten Zielgeschwindigkeit ankommen zu lassen. Dies kann optional unter Berücksichtigung topografischer Daten erfolgen, wie diese oben beschrieben wurden. Hierdurch kann es gegebenenfalls möglich sein, die Fahrstrategie derart zu verändern, sodass diese auf den Streckenverlauf Rücksicht nimmt. Hierdurch kann also gegebenenfalls eine weitere Verbesserung einer Fahrstrategie an reale Fahrsituationen ermöglicht werden.

Bei einem solchen Verfahren gemäß einem Ausführungsbeispiel kann das Verändern der Fahrstrategie ein Bestimmen einer veränderten Fahrstrategie ausgehend von dem vorbestimmten Zielpunkt und der vorbestimmten Zielgeschwindigkeit zu einer Ausgangsposition und einer an dem Ausgangspunkt vorliegenden Ausgangsgeschwindigkeit umfassen. Das Verändern der Fahrstrategie kann also rückwärts ausgehend von dem Zielpunkt und der vorbestimmten Zielgeschwindigkeit erfolgen. Hierdurch kann gegebenenfalls eine Veränderung der Fahrstrategie vereinfacht werden. Die Ausgangsgeschwindigkeit und der Ausgangspunkt können hierbei einer momentanen Position und einer momentanen Geschwindigkeit des Fahrzeugs entsprechen.

Optional kann bei einem Verfahren gemäß einem Ausführungsbeispiel das Verändern der Fahrstrategie unter Berücksichtigung eines Fahrprofils einer Mehrzahl von Fahrprofilen erfolgen. So kann beispielsweise die Mehrzahl der Fahrprofile unterschiedliche Anforderungen an die zu verändernde bzw. bestimmte Fahrstrategie ermöglichen. So kann beispielsweise eine Minimierung eines Kraftstoff- bzw. Energieverbrauchs in einem Fahrprofil im Vordergrund stehen. In einem anderen Fahrprofil kann beispielsweise eine Minimierung der Fahrzeit im Vordergrund stehen, wobei der Energiebedarf eine untergeordnete Rolle spielt. Ein weiteres Fahrprofil kann beispielsweise einen Kompromiss zwischen Zeitbedarf und Energieeffizienz umfassen.

Optional kann bei einem Verfahren gemäß einem Ausführungsbeispiel das Verändern der Fahrstrategie bezogen auf den Distanzparameter vollständig oder teilweise ein Aneinanderreihen wenigstens zweier unterschiedlicher Manöverlinien umfassen. Im Rahmen des Veränderns kann so gegebenenfalls aus mehr als einer Manöverlinie eine zusammengesetzte bzw. aneinandergereihte Fahrstrategie bereitgestellt werden, welche der beabsichtigten Fahrzeugbewegung entspricht. Hierdurch kann also gegebenenfalls auch eine Verbesserung einer Fahrstrategie an reale Fahrsituationen ermöglicht werden.

Nachfolgend werden unter Bezugnahme auf die beigefügten Figuren Ausführungsbeispiele näher beschrieben und erläutert.

Fig. 1 zeigt ein schematisches Blockschaltbild des Fahrzeugsteuergeräts gemäß einem Ausführungsbeispiel für ein Fahrzeug;

Fig. 2a zeigt ein Flussdiagramm eines Verfahrens gemäß einem Ausführungsbeispiel zum Verändern einer Fahrstrategie für ein Fahrzeug;

Fig. 2b zeigt ein Flussdiagramm eines Verfahrens gemäß einem Ausführungsbeispiel zum Verändern einer Fahrstrategie für ein Fahrzeug;

Fig. 3 illustriert unterschiedliche Manöver und ihnen zugeordnete Manöverlinien;

Fig. 4 zeigt eine Fahrstrategie, welche mehrere Manöverlinien wenigstens teilweise umfasst;

Fig. 5 illustriert ein Abweichen der Bewegung eines Fahrzeugs von der bestimmten Fahrstrategie und eine Änderung derselben im Rahmen eines Verfahrens gemäß einem Ausführungsbeispiel; und

Fig. 6 illustriert einen weiteren Fall, bei dem die Bewegung des Fahrzeugs von der zuvor bestimmten Fahrstrategie abweicht.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

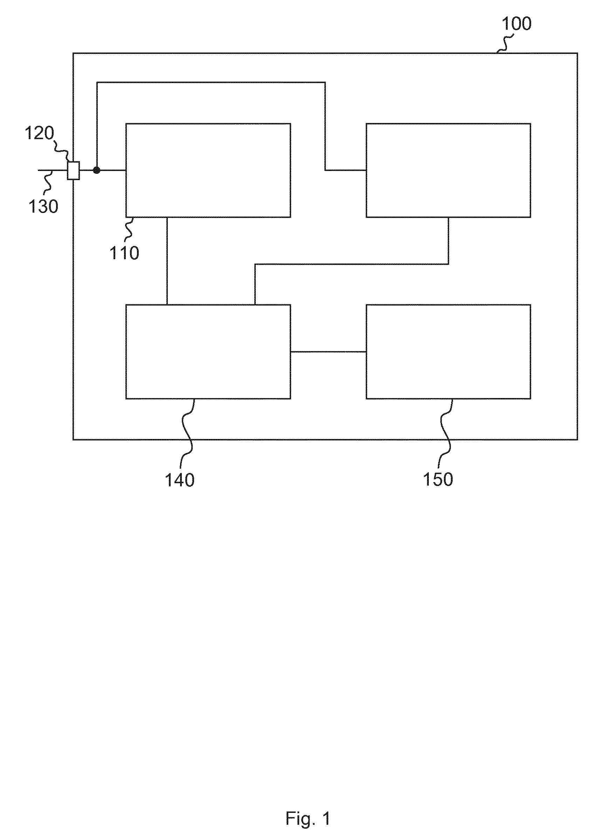

Fig. 1 zeigt ein vereinfachtes Blockschaltbild eines Fahrzeugsteuergeräts 100 gemäß einem Ausführungsbeispiel für ein Fahrzeug. Das Fahrzeugsteuergerät 100 umfasst einen Vergleicher 110 der über eine Schnittstelle 120 an eine Datenverbindung 130 gekoppelt ist, über die der Vergleicher 110 Information hinsichtlich einer Bewegung des Fahrzeugs empfangen kann. Der Vergleicher 110 ist so implementiert, dass er die Bewegung des Fahrzeugs bzw. die entsprechenden Informationen mit einer Fahrstrategie vergleicht. Die Informationen über die Fahrstrategie kann der Vergleicher110 beispielsweise ebenso über die Schnittstelle 120 und die Datenverbindung 130 empfangen.

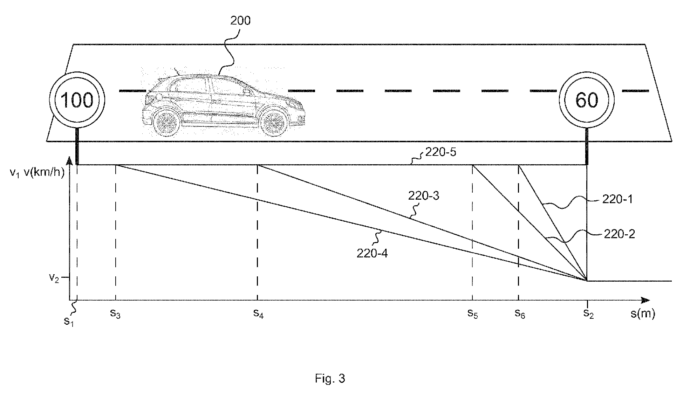

Die Fahrstrategie basiert hierbei auf wenigstens einer Manöverlinie einer Mehrzahl von Manöverlinien und zeigt in Abhängigkeit eines Distanzparameters einen von dem Fahrzeug möglichst einzuhaltenden Bewegungsparameter an. Auch die Manöverlinien stellen eine entsprechende Abhängigkeit des Bewegungsparameters als Funktion des Distanzparameters dar. Bei dem Distanzparameter kann es sich beispielsweise um eine Strecke, also beispielsweise eine von dem Fahrzeug zurückgelegte und/oder noch zurückzulegende Fahrstrecke, jedoch auch beispielsweise um eine Zeit handeln. Der Bewegungsparameter kann beispielsweise eine Geschwindigkeit oder auch eine Beschleunigung des Fahrzeugs darstellen. Verschiedene Manöver und beispielhafte Manöverlinie werden im Zusammenhang mit Fig. 3 näher erläutert.

Die Informationen hinsichtlich der Bewegung des Fahrzeugs können beispielsweise von einem Satellitennavigationssystem, einem Trägheitsnavigationssystem und/oder anderen Sensoren des Fahrzeugs bereitgestellt werden, mit deren Hilfe die Bewegung des Fahrzeugs erfassbar ist. Neben Beschleunigungssensoren, die beispielsweise auch im Rahmen des Trägheitsnavigationssystems zum Einsatz kommen können, können so beispielsweise Raddrehzahlsensoren, Getriebeausgangsdrehzahlsensoren, Lenkeinschlagssensoren oder andere Sensoren des Fahrzeugs verwendet werden. Je nach konkreter Implementierung können diese gegebenenfalls durch ein Steuergerät oder ein anderes Modul vorverarbeitet bzw. zwischenverarbeitet werden.

Der Vergleicher 110 ist ferner mit einem Korrektor 140 gekoppelt. Der Korrektor seinerseits ist bei dem in Fig. 1 gezeigten Ausführungsbeispiel eines Fahrzeugsteuergeräts 100 mit einem Manöverlinienbereitsteller 150 und einem Veränderer 160 gekoppelt. Der Veränderer 160 ist seinerseits mit der Schnittstelle 120 gekoppelt.

Stellt nun der Vergleicher 110 im Rahmen seines Betriebs fest, dass die Bewegung des Fahrzeugs und die der Bewegung des Fahrzeugs zugrunde liegende Fahrstrategie eine vorbestimmte Bedingung erfüllen, initiiert dieser eine Korrektur wenigstens einer Manöverlinie durch den Korrektor 140. Zu diesem Zweck wird dem Korrektor 140 von dem Manöverlinienbereitsteller 150 wenigstens eine, gegebenenfalls auch mehrere oder alle Manöverlinien bereitgestellt. Nach der Korrektur der wenigstens einen Manöverlinie wird dann von dem Veränderer 160 auf Basis der nunmehr wenigstens teilweise korrigierten Manöverlinien die ursprüngliche Fahrstrategie verändert. Je nach konkreter Implementierung des Fahrzeugsteuergeräts 100 kann so eine Information über die veränderte Fahrstrategie über die Schnittstelle 120 an eine externe Komponente ausgegeben werden. Bei dieser externen Komponente kann es sich beispielsweise um eine adaptive Geschwindigkeitsregeleinrichtung (Adaptive Cruise Control; ACC) handeln.

Das in Fig. 1 gezeigte Ausführungsbeispiel eines Fahrzeugsteuergeräts 100 stellt hierbei eine diskrete Implementierung eines Moduls dar, welches zur Anpassung der Fahrstrategie herangezogen werden kann. Das Fahrzeugsteuergerät 100 kann beispielsweise über einen CAN-Bus (Controller Area Network) oder eine andere Datenverbindung mit den zu seinem Betrieb notwendigen Information versorgt werden. Selbstverständlich können jedoch auch andere Datenkommunikationsschnittstellen und entsprechende Datenverbindungen 130 im Rahmen eines Ausführungsbeispiels implementiert werden. Auch können die entsprechenden Eingangsdaten und die Ausgangsdaten des Fahrzeugsteuergeräts 100 beispielsweise über unterschiedliche Schnittstellen empfangen bzw. gesendet werden.

Darüber hinaus kann das Fahrzeugsteuergerät 100 gemäß einem Ausführungsbeispiel jedoch auch weitere Komponenten umfassen. So kann es sich beispielsweise bei dem Fahrzeugsteuergerät 100 auch um ein solches handeln, bei dem zusätzliche Funktionen, beispielsweise die Funktionalität einer Geschwindigkeitsregeleinrichtung, eines Satellitennavigationssystems oder einer anderen Komponente integriert sind. Auch können beispielsweise der Vergleicher 110, der Korrektor 140, der Manöverlinienbereitsteller 150 und der Veränderer 160 teilweise oder vollständig gleiche Hardwarekomponenten, beispielsweise gleiche Speicher, Prozessoren, Prozessorkerne oder andere Infrastrukturen des entsprechenden Fahrzeugsteuergeräts 100 nutzen. Ein Datenaustausch zwischen diesen Komponenten kann beispielsweise durch einen Datenbus, eine feste Verdrahtung, jedoch ebenso über einen Austausch über Speicherstellen eines entsprechenden Speichers erfolgen, um nur einige Beispiele möglicher Implementierungen zu erwähnen. Anders ausgedrückt kann ein Fahrzeugsteuergerät 100 gemäß einem Ausführungsbeispiel auch auf Basis eines computergestützten bzw. prozessorgestützten Systems implementiert werden. Ebenso kann ein Fahrzeugsteuergerät 100 gemäß einem Ausführungsbeispiel auch auf Basis einer anderen programmierbaren Hardwarekomponente implementiert werden. Auf diesen kann dann ein Programmcode eines Ausführungsbeispiels eines Verfahrens zum Verändern einer Fahrstrategie für ein Fahrzeug ausgeführt werden.

Der Manöverlinienbereitsteller 150 kann hierbei beispielsweise auf Basis eines Speichers implementiert sein, in dem die für das betreffende Fahrzeug typischen Manöverlinien abgespeichert sind. Ebenso kann es jedoch möglich sein, dass der Manöverlinienbereitsteller 150 diese auf Basis anderer, beispielsweise fahrzeugbezogener und/oder umgebungsbezogener Parameter bereitstellt.

Ein Fahrzeugsteuergerät 100 gemäß einem Ausführungsbeispiel sowie die nachfolgend beschriebenen Ausführungsbeispiele von Verfahren zum Verändern einer Fahrstrategie für ein Fahrzeug können so eine Verbesserung einer Fahrstrategie im Hinblick auf reale Fahrsituationen ermöglichen. Bei konventionellen Verfahren werden typischerweise Streckenabschnitte definiert und entsprechend verbrauchsoptimierte Fixpunkte bzw. Kurven vorgegeben. Bei diesen Verfahren werden idealisierte Zustände angenommen, wobei das reale Verfahren jedoch häufig nicht ausreichend berücksichtigt wird. Hierdurch kann gegebenenfalls die ideale Energieeffizienz beim Fahren nicht erreicht werden. Außerdem kann es gegebenenfalls passieren, dass der Kunde bzw. der Fahrer des Fahrzeugs es nicht akzeptiert, wenn aufgrund von Störgrößen von einem ideal angenommenen Zustand eines Manövers abgewichen wird. Zu den Manövern, die im Zusammenhang mit Fig. 3 noch näher beschrieben werden, zählen unter anderem je nach konkreter Implementierung des Fahrzeugs und des entsprechenden Fahrzeugsteuergeräts 100 der Freilauf, der Schub, die Rekuperation und das Schleppen, um nur einige Beispiele zu nennen.

So kann bei konventionellen Systemen es vorkommen, dass das betreffende Manöver vor dem eigentlichen Ziel, also beispielsweise einem Ortsschild, aufhört und das Fahrzeug zum Erreichen des Ziels erneut beschleunigen muss. Somit fährt das Fahrzeug in diesem letzten Bereich nicht in dem Maße energieeffizient, wie dies gegebenenfalls möglich wäre. Dies kann beispielsweise aufgrund von Gegenwind oder anderen den Fahrwiderstand beeinträchtigenden Einflüssen geschehen, aus denen beispielsweise der Ausrollvorgang einige Hundert Meter, beispielsweise zweihundert Meter, vor dem betreffenden Ortsschild bereits beendet ist und das Fahrzeug noch bis zu diesem mit Motor weiter fahren muss.

Durch den Einsatz eines Fahrzeugsteuergeräts 100 gemäß einem Ausführungsbeispiel bzw. durch den Einsatz eines entsprechenden Verfahrens zum Verändern einer Fahrstrategie für ein Fahrzeug gemäß einem Ausführungsbeispiel kann hier eine Verbesserung der Fahrstrategie im Sinne einer Anpassung an die realen Fahrsituationen mit vergleichsweise einfachen Mitteln erzielt werden.

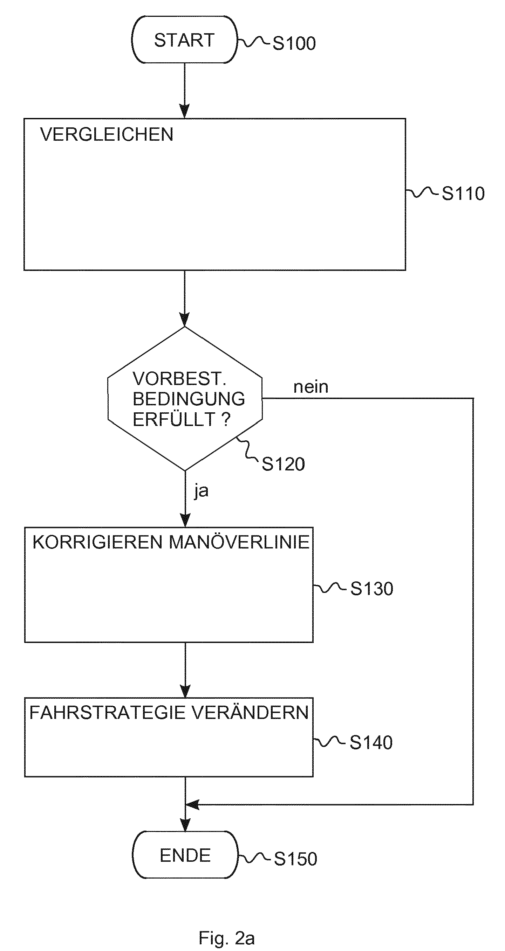

Fig. 2a zeigt ein Flussdiagramm eines Ausführungsbeispiels eines Verfahrens zum Verändern einer Fahrstrategie für ein Fahrzeug. Auch hier basiert die Fahrstrategie wiederum auf wenigstens einer Manöverlinie einer Mehrzahl von Manöverlinien, von denen einige im Zusammenhang mit Fig. 3 näher erläutert werden. Die Manöverlinien und die Fahrstrategie weisen hierbei eine Abhängigkeit eines Bewegungsparameters M als Funktion eines Distanzparameters d auf. Der Bewegungsparameter M kann hierbei beispielsweise eine Geschwindigkeit v oder auch eine Beschleunigung a des Fahrzeugs sein, während der Distanzparameter d eine Strecke s oder auch eine Zeit t sein kann.

Die Fahrstrategie kann hierbei derart bestimmt sein, sodass das Fahrzeug an einem vorbestimmten Zielpunkt mit einer vorbestimmten Zielgeschwindigkeit ankommt. Dies kann beispielsweise unter Berücksichtigung topografischer Daten erfolgen, also beispielsweise unter Berücksichtigung zweidimensionaler Karteninformationen, aus welchen beispielsweise Geschwindigkeitsbeschränkungen, Kurven mit ihren entsprechenden Kurvenradien und andere die Geschwindigkeit beeinflussenden Parametern ableitbar sein können. Die topografischen Daten können darüber hinaus optional auch Informationen hinsichtlich einer Steigung, Höhe oder anderer Information umfassen, aus denen gegebenenfalls Faktoren ableitbar sind, die einen Einfluss auf die Fahrzeuggeschwindigkeit haben können.

Nach einem Start des Verfahrens in Schritt S100 wird zunächst im Rahmen eines Schritts S110 die Fahrstrategie mit einer Bewegung des Fahrzeugs verglichen. Erfüllen diese eine vorbestimmte Bedingung (prüfen, Schritt S120) wird zunächst im Rahmen eines Schritts S130 wenigstens eine Manöverlinie der Mehrzahl von Manöverlinien auf Basis des Vergleichs zwischen der Bewegung des Fahrzeugs und der Fahrstrategie korrigiert. Anschließend wird im Rahmen eines Schritts S140 die Fahrstrategie auf Basis der nunmehr gegebenenfalls korrigierten Manöverlinien verändert, bevor das Verfahren in Schritt S150 endet.

Ergibt hingegen die Prüfung in Schritt S120, dass die vorbestimmte Bedingung nicht erfüllt ist, werden die Schritte S130 des Korrigierens wenigstens einer Manöverlinie und der Schritt S140 des anschließenden Veränderns der Fahrstrategie übersprungen.

Das Korrigieren der wenigstens einen Manöverlinie der Mehrzahl von Manöverlinien kann hierbei beispielsweise auf Basis wenigstens einer linearen, polygonalen und/oder rationalen Funktion erfolgen. Ausgehend von einer Manöverlinie M(d) kann so eine korrigierte Manöverlinie M'(d) auf Basis beispielsweise zweier Funktionen f und g erfolgen. Die Funktion f kann hierbei direkt auf die Werte der Manöverlinie, also die Bewegungsparameter wirken, während die zweite Funktion g auf das Argument der Manöverlinie, also beispielsweise den Distanzparameter d wirken kann. Es kann so für die korrigierte Manöverlinie M'(d) beispielsweise Gleichung 1 gelten, wobei zur Vereinfachung der Darstellung lediglich eine Abhängigkeit von dem Distanzparameter d angenommen wird.

$$M'(d) = g\big(M(\,f(d)\,)\big) \qquad\qquad (1)$$

Die Funktionen f und g können hierbei unabhängig voneinander eine rationale Funktion, eine polygonale Funktion und/oder eine lineare Funktion sein. Im Folgenden wird dies anhand der Funktion f näher erläutert, gilt jedoch entsprechend und gegebenenfalls unabhängig von dieser auch für die Funktion g.

Im Falle einer rationalen Funktion ist die Funktion f als Quotient zweier Polynome gemäß Gleichung (2) gegeben.

$$f(p) = \sum_{i=0}^{Q} a_i \cdot p^i \,/\, \sum_{j=0}^{R} b_j \cdot p^j \qquad\qquad (2)$$

Hierbei sind i, j Indizes, die bezüglich des Polynoms im Zähler bzw. bezüglich des Polynoms im Nenner jeweils von 0 bis zum Grad Q bzw. R des betreffenden Polynoms zählen. Die Formelzeichen $a_i$ bzw. $b_j$ stellen hierbei die Koeffizienten der betreffenden Polynome dar, die mit der entsprechenden Potenz des Parameters p ($p^i$ bzw. $p^j$) multipliziert werden, bevor die vorgenannte Summe gebildet wird.

Im Falle einer polygonalen Funktion f in Abhängigkeit des Parameters p vereinfacht sich die Gleichung (2) dadurch, dass alle Koeffizienten $b_j$ außer dem Koeffizienten $b_0$ verschwinden, also identisch 0 sind. Ohne Beschränkung der Allgemeinheit vereinfacht sich so Gleichung (2) unter der Annahme, dass $b_0$ = 1 ist, Gleichung (2) zu Gleichung (3).

$$f(p) = \sum_{i=0}^{Q} a_i \cdot p^i \qquad\qquad (3)$$

Die polygonale Funktion in Gleichung (3) vereinfacht sich zu einer linearen Funktion, wenn der Grad Q des Polynoms 1 beträgt bzw. die weiteren Koeffizienten $a_2$, $a_3$, ... verschwinden. In einem solchen Fall ergibt sich die lineare Funktion in Gleichung (4).

$$f(p) = a_1 \cdot p + a_0 \qquad\qquad (4)$$

Eine lineare Funktion im engeren Sinn ergibt sich nunmehr aus Gleichung (4), wenn ebenso das absolute Glied $a_0$ verschwindet, wenn also gilt $a_0$ = 0. In diesem Fall ergibt sich die lineare Funktion im engeren Sinn gemäß Gleichung (5), bei der der Funktionswert f(p) proportional zu dem Parameter p ist.

$$f(p) = a_1 \cdot p \qquad\qquad (5)$$

Das Korrigieren der wenigstens einen Manöverlinie kann hierbei auf Basis eines Korrekturfaktors c erfolgen. Der Korrekturfaktor c kann auf einem Unterschied zwischen einer aus der Bewegung des Fahrzeugs abgeleiteten Geschwindigkeit und einer auf Basis der Fahrstrategie bestimmten Geschwindigkeit beruhen. Der Korrekturfaktor c kann so beispielsweise auf der Differenz zwischen der Geschwindigkeit des Fahrzeugs, welche aus den Bewegungsdaten des Fahrzeugs abgeleitet werden kann, und der Geschwindigkeit, die aus der Fahrstrategie bestimmt ist, definiert sein. Ebenso kann er auch auf einem Unterschied zwischen einer aus der Bewegung des Fahrzeugs abgeleiteten Geschwindigkeitsdifferenz und einer auf Basis der Fahrstrategie bestimmten Geschwindigkeitsdifferenz basieren. Alternativ oder ergänzend kann es sich bei dem Korrekturfaktor ebenso um ein Verhältnis aus den beiden zuvor genannten Geschwindigkeiten bzw. der vorgenannten Geschwindigkeitsdifferenzen, also beispielsweise einem Quotienten der betreffenden Größen, handeln.

In einem solchen Fall kann Gleichung (1) beispielsweise dadurch vereinfacht werden, dass anstelle der Funktion g eine lineare Funktion im engeren Sinn gemäß Gleichung (5) auf Basis des Korrekturfaktors c verwendet wird. Unter Vernachlässigung einer gegebenenfalls in der linearen Funktion im engeren Sinn umfassten Proportionalitätskonstante (vgl. Koeffizient $a_1$ in Gleichung (5)) ergibt sich so beispielsweise die korrigierte Manöverlinie M'(d) gemäß der Proportionalitätsbeziehung (6).

$$M'(d) \propto c \cdot M(\,f(d)\,) \qquad\qquad (6)$$

Auch die Funktion f, welche sich auf den Distanzparameter d bezieht, kann hierbei gegebenenfalls durch eine lineare Funktion gemäß einer der Gleichungen (4), (5) oder einer polygonalen Funktion gemäß Gleichung (3) oder einer rationalen Funktion gemäß (2) bestimmt sein. Selbstverständlich können anstelle der zuvor beschriebenen linearen, polygonalen und/oder rationalen Funktionen auch komplexere Funktionen zum Einsatz kommen, die optional auch im Rahmen einer Potenzentwicklung angenähert und somit durch eine polygonale Funktion angenähert werden können.

Das Korrigieren (Schritt S130) der wenigsten einen Manöverlinie kann darüber hinaus auch unter Berücksichtigung wenigstens eines vorangegangenen Korrigierens dieser oder einer anderen Manöverlinie erfolgen. So kann beispielsweise eine Mittlung über wenigstens einen, gegebenenfalls auch mehrere Korrekturfaktoren c implementiert werden. Eine entsprechende Mittlung kann beispielsweise auf Basis einer arithmetischen Mittlung mit oder ohne Berücksichtigung von Gewichtungsfaktoren erfolgen. Selbstverständlich können auch andere Mittlungsverfahren angewendet werden, beispielsweise eine rekursive Mittlung. Auch eine solche rekursive Mittlung kann beispielsweise auf Basis eines arithmetischen Mittelns, jedoch auch auf Basis eines anderen Mittlungsverfahrens implementiert werden.

Auch wenn der Einfachheit halber zuvor nicht von einer Mittlung auf Basis eines Korrekturfaktors c ausgegangen wurde, können selbstverständlich auch andere Mittlungsparameter eingesetzt werden, bei denen beispielsweise die Manöverlinien M(d) herangezogen werden.

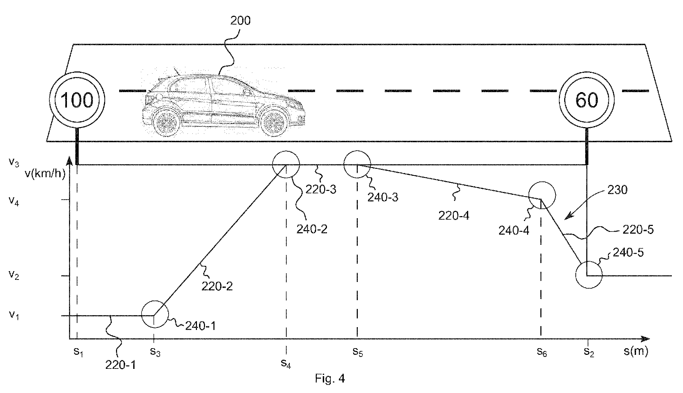

Das Verändern S140 der Fahrstrategie kann bei einem Ausführungsbeispiel derart erfolgen, dass das Fahrzeug möglichst an einem vorbestimmten Zielpunkt mit einer vorbestimmten Zielgeschwindigkeit ankommt. Dies kann beispielsweise durch eine Rückwärtsrechnung der Fahrstrategie erfolgen, bei der ausgehend von dem vorbestimmten Zielpunkt und der vorbestimmten Zielgeschwindigkeit die Fahrstrategie zu einer Ausgangsposition und einer an dem Ausgangspunkt vorliegenden Ausgangsgeschwindigkeit erfolgt. Die Ausgangsgeschwindigkeit und der Ausgangspunkt können hierbei beispielsweise der momentanen Position des Fahrzeugs und seiner Geschwindigkeit entsprechen. Es können so bei der Veränderung der Fahrstrategie, die beispielsweise in Zusammenhang mit Fig. 4 noch näher erläutert wird, ein heuristisches Verfahren angewendet werden, bei dem ergänzend oder alternativ eine Berücksichtigung eines Fahrprofils erfolgen kann.

So kann die Fahrstrategie beispielsweise unter Berücksichtigung eines Fahrprofils einer Mehrzahl von Fahrprofilen erfolgen, die beispielsweise eine unterschiedliche Gewichtung hinsichtlich des anzustrebenden Kraftstoff- bzw. Energieverbrauchs einerseits und einem Zeitbedarf für die betreffende Strecke umfassen. So kann es beispielsweise möglich sein, in einem Fahrprofil als wesentliches Ziel eine Minimierung des Kraftstoff- bzw. Energieverbrauchs zu definieren, wobei ein Zeitbedarf eine untergeordnete Rolle spielt. Ebenso kann der Fokus bei der Veränderung der Fahrstrategie auf einer Minimierung der Fahrzeit liegen, wobei der Energiebedarf eine untergeordnete Rolle spielt. Selbstverständlich kann dazwischen auch ein beliebiger Kompromiss zwischen Zeitbedarf und Energieeffizienz gewählt werden. So kann also beispielsweise bei sonst identischen Ausgangsbedingungen unter Berücksichtigung verschiedener Fahrprofile jeweils eine unterschiedliche Fahrstrategie resultieren.

Die Fahrstrategien können hierbei, wie des beispielsweise im Zusammenhang mit Fig. 4 noch näher erläutert wird, ein Aneinanderreihen von unterschiedlichen Manöverlinien umfassen. Die einzelnen Manöverlinien können hierbei vollständig, also beispielsweise bis zum Erreichen der Zielgeschwindigkeit, jedoch auch nur teilweise im Rahmen einer solchen Fahrstrategie durchfahren werden. Die einzelnen Manöverlinien werden hierbei bezogen auf den jeweils verwendeten Distanzparameter aneinandergereiht, also konkateniert.

Die vorbestimmte Bedingung, die im Rahmen des Schritts des Prüfens S120 angelegt wird, kann beispielsweise dann erfüllt sein, wenn ein Unterschied zwischen der aus der Bewegung des Fahrzeugs abgeleiteten Geschwindigkeit und der auf Basis der Fahrstrategie bestimmten Geschwindigkeit eine vorbestimmte Schwelle übersteigt. Alternativ oder ergänzend kann dies ebenfalls für ein Übersteigen einer gegebenenfalls abweichenden vorbestimmten Schwelle im Falle eines Verhältnisses der beiden zuvor genannten Geschwindigkeiten gelten. Hierbei kann wiederum der Unterschied auf einer Differenz der beiden Geschwindigkeiten beruhen, während das Verhältnis beispielsweise durch einen Quotienten der beiden Geschwindigkeiten zueinander gegeben sein kann. Je nach konkreter Implementierung können hierbei unterschiedliche Vorzeichen bzw. ein Inverses verwendet werden.

Die vorbestimmte Schwelle kann darüber hinaus eine Abhängigkeit von einer Distanz zwischen der aktuellen Position des Fahrzeugs und dem vorbestimmten Zielpunkt aufweisen. Hierdurch kann es möglich sein gegebenenfalls unnötige Anpassungen der Fahrstrategie zu vermeiden, indem beispielsweise bei einer noch großen zurückzulegenden Distanz zu der Zielposition eine Abweichung von der Fahrstrategie ignoriert wird, die sonst bei einer gegebenenfalls kürzeren Distanz bereits zu einer Korrektur wenigstens einer der Manöverlinien unter einer entsprechenden Veränderung der Fahrstrategie führen würde. So kann gegebenenfalls im weiteren Streckenverlauf vor dem Erreichen der Zielposition die zuvor aufgetretene Abweichung durch eine entsprechend entgegengerichtete Abweichung gegebenenfalls teilweise oder vollständig kompensiert werden. Auch kann gegebenenfalls eine Überkompensation erfolgen. Ist beispielsweise aufgrund eines Wetters mit einem starken Wind die Fahrzeuggeschwindigkeit in einem ersten Abschnitt der Fahrstrategie deutlich hinter der Geschwindigkeit gemäß der Fahrstrategie zurückgeblieben, kann dies gegebenenfalls durch ein Drehen des Windes relativ zu dem Fahrzeug zu einem späteren Zeitpunkt teilweise oder vollständig ausgeglichen werden. Ein solches Drehen kann beispielsweise auch durch eine Drehung des Fahrzeugs auftreten, ohne dass es zu einer merklichen Änderung der Windrichtung kommt.

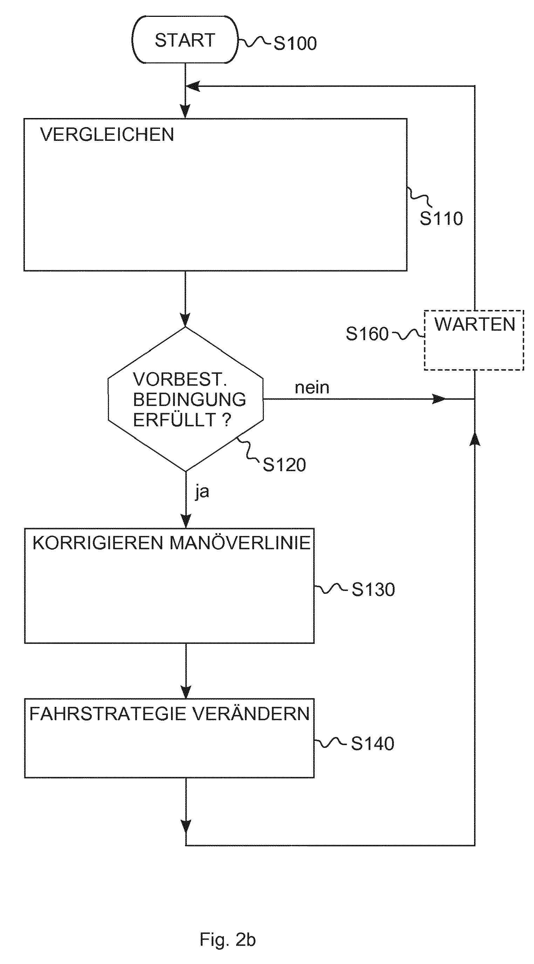

Optional kann bei einem Ausführungsbeispiel eines Verfahrens das Vergleichen ein im Wesentlichen zeitlich kontinuierliches und/oder ein im Wesentlichen zeitlich periodisches Vergleichen umfassen. Um dies zu illustrieren, zeigt Fig. 2b ein Flussdiagramm eines weiteren Ausführungsbeispiels eines Verfahrens zum Verändern einer Fahrstrategie für ein Fahrzeug, welches dem Flussdiagramm aus Fig. 2a ähnlich ist. Es unterscheidet sich im Wesentlichen von dem in Fig. 2a gezeigten Flussdiagramm dadurch, dass nach dem Durchlaufen des Veränderns der Fahrstrategie (Schritt S140) ein Rücksprung zu dem Vergleichen (Schritt S110) erfolgt. Entsprechend auch nach dem Durchlaufen des Prüfens der vorbestimmten Bedingung in Schritt S120 im Falle ihres Nichterfüllens erneut ein Vergleichen im Rahmen des Schritts S110 initiiert. Hierdurch kann im Wesentlichen ein zeitlich kontinuierliches Überwachen des Einhaltens der Fahrstrategie durch das Fahrzeug implementiert werden, wobei das Verfahren durch ein in Fig. 2b nicht gezeigtes Unterbrechen (z. B. im Rahmen einer entsprechenden Prüfung) unterbrochen bzw. beendet werden kann. Optional kann jedoch im Rahmen eines Schritts eines Wartens S160 eine Verzögerung integriert werden, sodass anstelle einer im Wesentlichen zeitlich kontinuierlichen Prüfung ein im Wesentlichen zeitlich periodisches Vergleichen der Bewegung des Fahrzeugs mit der Fahrstrategie erfolgen kann.

Fig. 3 illustriert anhand einer konkreten Fahrsituation unterschiedliche Manöverlinien und unterschiedliche Manöver. Ein Fahrzeug 200 bewegt sich hierbei in einem Bereich, in dem eine zulässige Höchstgeschwindigkeit von 100 km/h vorliegt. An einem Endpunkt $s_2$ wird im vorliegenden Beispiel die zulässige Höchstgeschwindigkeit auf 60 km/h begrenzt.

Um nun ausgehend von der momentanen Fahrzeugposition, also der Ausgangsposition $s_1$, bei der eine Geschwindigkeit $v_1$, vorliegt, zu einer Zielgeschwindigkeit $v_2$ von 60 km/h an dem Zielpunkt $s_2$, also dem Geschwindigkeitsbegrenzungsschild, zu gelangen, können nun eine Mehrzahl verschiedener Manöver herangezogen werden. So zeigt Fig. 3 vier unterschiedliche Manöverlinien 220-1, 220-2, 220-3 und 220-4, die unterschiedlichen Manövern zugeordnet sind. Genauer gesagt kann hierbei die Manöverlinie 220-4 zwei unterschiedlichen Manövern zugeordnet sein, wie die nachfolgende Erörterung noch zeigen wird.

Um an der Zielposition $s_2$ die Zielgeschwindigkeit $v_2$ zu erzielen, kann das Fahrzeug beispielsweise ein Bremsmanöver durchführen. Im Falle eines Fahrzeugs 200, welches auf Basis eines Verbrennungsmotors arbeitet, kann hierbei der Antriebsstrang geschlossen oder offen sein. Die Bremsung erfolgt hierbei ohne Rekuperation, also ohne Wiedergewinnung der in der kinetischen Energie des Fahrzeugs 200 steckenden Energie. Zu diesem Zweck können beispielsweise die Bremsen des Fahrzeugs 200 angesteuert werden. Gleiches gilt ebenso für ein Fahrzeug 200, welches auf Basis eines Elektroantriebs bzw. auf Basis eines Hybridantriebs arbeitet. Auch bei diesem kann der Antriebsstrang geschlossen oder offen sein, während die Bremsung auf mechanische Art und Weise durchgeführt wird, ohne dass eine Wiedergewinnung der kinetischen Energie teilweise oder vollständig initiiert wird. Diesem Bremsmanöver entspricht die am Steilsten verlaufende Manöverlinie 220-1 in Fig. 3.

Die Manöverlinie 220-2 entspricht im hier gezeigten Beispiel einem Rekuperationsmanöver, bei dem also wenigstens ein Teil der kinetischen Energie des Fahrzeugs 200 zwischengespeichert wird. Im Falle eines Fahrzeugs 200, welches auf Basis eines Verbrennungsmotors arbeitet, kann hier beispielsweise eine mechanische Rekuperation, beispielsweise auf Basis eines KERS-Systems (KERS = Kinetic Energy Recovery System) durchgeführt werden, bei dem die kinetische Energie beispielsweise in Schwungrädern zwischengespeichert wird. Im Falle eines Hybridantriebs bzw. eines Elektroantriebs kann hierzu der Triebstrang typischerweise geschlossen werden und es wird eine Rekuperation der Bremsenergie, also eine elektrische Bremsung vollzogen. Auch hier kann ergänzend selbstverständlich eine Kombination mit einer mechanischen Bremsung erfolgen. Typischerweise werden hierbei Verzögerungswerte erzielt, die unter denen eines Bremsmanövers liegen. Entsprechend weist die Manöverlinie 220-2 eine flachere (negative) Steigung als die Manöverlinie 220-1 des Bremsmanövers auf.

Die Manöverlinie 220-3 entspricht einem Schubmanöver, welches auch als Schleppbetrieb bezeichnet wird. Die Manöverlinie 220-3 weist hierbei einen flacheren Verlauf als die Manöverlinie 220-2 des Rekuperationsmanövers auf. Im Falle eines Fahrzeugs 200 mit einem Verbrennungsmotor wird hierbei typischerweise der Antriebsstrang geschlossen und das Bremsmoment wird aufgrund der Motorschleppverluste erzielt. Weist das Fahrzeug eine Schubabschaltung auf, kann hierdurch gegebenenfalls der Kraftstoffaufwand vollständig eingespart werden. Die Energiedissipation erfolgt hier durch die Motorschleppverluste. Im Falle eines Elektroantriebs bzw. eines Hybridantriebs kann auch hier der Antriebsstrang geschlossen werden. Das Bremsmoment erfolgt hier aufgrund innerer Verluste in dem Elektromotor bzw. der Elektro-Maschine. Hierbei erfolgt keine Energieentnahme aus der Batterie, sodass die Energiedissipation aufgrund der Schleppverluste in dem Elektromotor erfolgt. Häufig kann es ratsam sein, in einem solchen Fall eine Rekuperation nicht in Betracht zu ziehen, da diese gegebenenfalls aufgrund eines schlechten Wirkungsgrads nicht sinnvoll anwendbar ist.

Die vierte in Fig. 3 eingezeichnete Manöverlinie 220-4 weist eine noch flachere Steigung als die Manöverlinie 220-3 des Schubmanövers auf. Die Manöverlinie 220-4 ist hierbei dem Freilaufmanöver bzw. dem Segelmanöver zugeordnet.

Im Falle eines Fahrzeugs 200 mit einem Verbrennungsmotor wird bei dem Segelmanöver der Antriebsstrang geöffnet, sodass von dem Verbrennungsmotor selbst kein Bremsmoment auf die angetriebenen Räder übertragen wird. Der Verbrennungsmotor kann hierbei stehen, sodass kein Kraftstoffaufwand anfällt. Im Falle eines Elektroantriebs bzw. eines Hybridantriebs kann der Antriebsstrang ebenfalls geöffnet sein und es kann ebenfalls kein Bremsmoment aufgrund der Antriebsaggregate an die angetriebenen Räder übertragen werden. Auch hier kann daher gegebenenfalls eine Bewegung des Fahrzeugs ohne Energieaufwand ermöglicht werden.

Die Manöverlinie 220-4 entspricht jedoch auch einem Freilaufmanöver, welches im Falle eines Fahrzeugs 200 mit einem Verbrennungsmotor auch als Rollmodus bezeichnet wird. In diesem Manöver ist der Antriebsstrang typischerweise geöffnet, sodass von dem Verbrennungsmotor kein Bremsmoment auf die angetriebenen Räder übertragen wird. Es wird jedoch Kraftstoff für den Leerlaufbetrieb des Motors aufgewendet.

Das Freilaufmanöver wird im Falle eines Elektroantriebs bzw. eines Hybridantriebs auch als Nullmomentmanöver bezeichnet. Bei diesem ist der Antriebsstrang geschlossen, es wird jedoch kein Bremsmoment von dem Elektromotor auf die angetriebenen Räder übertragen. Der Energieaufwand wird hierbei für die nachfolgend kurz skizzierte Nullmomentregelung im Allgemeinen moderat gehalten, steigt jedoch gegebenenfalls mit der Motordrehzahl an. Bei der Nullmomentregelung wird dem elektrischen Aggregat typischerweise etwa so viel elektrische Energie zugeführt, dass im Wesentlichen weder ein bremsendes noch ein beschleunigendes Moment bei der aktuellen Drehzahl an den Antriebsstrang abgegeben wird. Die zugeführte Energie wird ausschließlich zum Ausgleich der inneren drehzahlabhängigen Verluste verwendet. Die hierzu benötigte Energie entspricht etwa der, die auch im Falle eines Verbrennungsmotors während des Freilaufbetriebs bzw. des Freilaufmanövers aufzuwenden ist.

Um nun an dem Zielpunkt $s_2$ mit der Zielgeschwindigkeit $v_2$ anzukommen, kann das Fahrzeug 200 nun unterschiedliche Fahrstrategien verfolgen. So kann es ausgehend von einer Konstantfahrt, welche als Manöverlinie 220-5 in Fig. 3 eingezeichnet ist, bis zu einer Position $s_3$ sich bewegen und dort in die Manöverlinie 220-4 des Freilaufmanövers bzw. des Segelmanövers übergehen. Alternativ kann es ebenso bis zu der Position $s_4$ mit der konstanten Geschwindigkeit, also der Manöverlinie 220-5 folgend weiterfahren, und dort auf die Manöverlinie 220-3 des Schubmanövers wechseln. Entsprechend kann das Fahrzeug alternativ auch die Konstantfahrt (Manöverlinie 220-5) bis zu der Position $s_5$ weiter verfolgen und dort auf die Manöverlinie 220-2 des Rekuperationsmanövers wechseln. Schließlich ist es auch möglich, die Konstantfahrt (Manöverlinie 220-5) bis zu der Position $s_6$ zu verfolgen und dort auf die Manöverlinie 220-1 des Bremsmanövers zu wechseln.

Die Auswahl, welche der skizzierten Fahrstrategien nun verfolgt wird, kann beispielsweise von dem von dem Fahrer voreingestellten bzw. auf andere Art und Weise bestimmten Fahrprofil abhängig sein oder abhängig gemacht werden. So wird die Fahrzeit zwischen der Ausgangsposition $s_1$ und der Zielposition $s_2$ durch die Fahrstrategie minimiert, welche das Bremsmanöver und die zugehörige Manöverlinie 220-1 umfasst. Je nach konkreten Randbedingungen kann jedoch durch eine der anderen skizzierten Fahrstrategien wahrscheinlich eine solche erzielt werden, welche einen geringeren Energieverbrauch ermöglicht. Welche dies sein kann, kann von einer Vielzahl zusätzlicher Parameter, beispielsweise einem Verbrauch des betreffenden Antriebsaggregats und anderer Parameter, abhängen.

Auch wenn in Fig. 3 als Distanzparameter d die Strecke s verwendet wurde, kann selbstverständlich bei einem anderen Ausführungsbeispiel als Distanzparameter auch eine Zeit t verwendet werden. Gleiches gilt auch für den Bewegungsparameter, der bei dem in Fig. 3 gezeigten Ausführungsbeispiel eine Geschwindigkeit v ist. Er kann jedoch ebenso eine Beschleunigung a des Fahrzeugs 200 darstellen.

Fig. 4 illustriert eine weitere Situation, bei der ein Fahrzeug ausgehend von einer Ausgangsposition $s_1$, bei einer an diesem vorliegenden Ausgangsgeschwindigkeit $v_1$ zu einem Zielpunkt $s_2$ mit einer dort vorherrschenden Zielgeschwindigkeit $v_2$ bewegt werden soll. So illustriert Fig. 4 eine Fahrstrategie 230, welche fünf Segmente aufweist, die entsprechenden Manöverlinien 220-1, 220-2, 220-3, 220-4 und 220-5 entspricht. Die einzelnen Manöverlinien 220 grenzen hierbei entlang der als Distanzparameter dienenden Strecke s an Manöverpunkten 240-1, 240-2, 240-3, 240-4 und 240-5 aneinander. Der Manöverpunkt 240-5 entspricht hierbei der Zielposition S2 und der dort vorherrschenden Zielgeschwindigkeit $v_2$. Analog entsprechen den einzelnen Manöverpunkten 240 jeweils ein Wert hinsichtlich des Distanzparameters sowie ein Wert des Bewegungsparameters, bei dem es sich auch in diesem Ausführungsbeispiel wiederum um die Geschwindigkeit v des Fahrzeugs 200 handelt.

Ausgehend von der Ausgangsgeschwindigkeit $v_1$ umfasst die Fahrstrategie 230 zunächst die Manöverlinie 220-1, bei der es sich um ein Konstantfahrmanöver handelt. An dem ersten Manöverpunkt 240-1 geht die Fahrstrategie 230 in die zweite Manöverlinie 220-2 über bei der es sich um ein Beschleunigungsmanöver handelt. Ausgehend von der Geschwindigkeit $v_1$ beschleunigt so das Fahrzeug 200 entlang der Strecke von $s_3$ bis $s_4$ auf die Geschwindigkeit $v_3$, die dieses an dem zweiten Manöverpunkt 240-2 erreichen soll.

Dort schließt sich eine dritte Manöverlinie 220-3 an, bei der es sich erneut um ein Konstantfahrmanöver bei der Geschwindigkeit $v_3$ handelt. Bei einer Strecke $s_5$, der der dritte Manöverpunkt 240-3 entspricht, geht die Fahrstrategie 230 in eine vierte Manöverlinie 220-4 über, bei der es sich um ein Freilaufmanöver oder ein Segelmanöver handelt. Entsprechend reduziert sich bis zu dem vierten Manöverpunkt 240-4, also auf der Strecke von $s_5$ bis $s_6$ die Geschwindigkeit auf einen Geschwindigkeitswert $v_4$.

Bei dem vierten Manöverpunkt 240-4, also dem Streckenpunkt $s_6$ weist die Fahrstrategie 230 eine fünfte Manöverlinie 220-5 auf, bei der es sich um ein Schubmanöver handelt, mit der das Fahrzeug 200 von der Geschwindigkeit $v_4$ auf die Zielgeschwindigkeit $v_2$ bis zu der Zielposition $s_2$ verzögert wird.

Ein Fahrzeugsteuergerät 100 gemäß einem Ausführungsbeispiel oder auch ein Verfahren gemäß einem Ausführungsbeispiel ermöglicht es nun, im Falle einer auftretenden Abweichung von der Fahrstrategie 230 das Fahrzeug über eine Korrektur wenigstens einer der Manöverlinien 220 und eine Veränderung der Fahrstrategie 230 entsprechend hinsichtlich seiner Bewegung anzupassen. So kann beispielsweise mithilfe eines Verfahrens gemäß einem Ausführungsbeispiel eine Ist-Geschwindigkeit kontinuierlich mit ihrem Sollverlauf verglichen werden, der sich aus der Fahrstrategie 230 ergibt. Ab einem Überschreiten eines Schwellwertes, bei dem es sich beispielsweise um eine Geschwindigkeitsdifferenz handeln kann, wird dann wenigstens eine der Manöverlinien 220 korrigiert und anschließend die Fahrstrategie 230 entsprechend verändert. Die Schwelle bzw. der Schwellenwert kann in einem regelbaren, steuerbaren oder anders beeinflussbaren Bereich liegen. Die Größe des Bereichs kann hierbei von dem betreffenden Fahrzeug und dem Einsatzgebiet des Fahrzeugs abhängen. So kann beispielsweise bei schnelleren Fahrzeugen ein größerer Bereich akzeptabel sein als bei langsameren Fahrzeugen, die beispielsweise besonderen Geschwindigkeitsbegrenzungen unterliegen. So kann beispielsweise im Fall eines Personenkraftwagens, für den keine besondere Geschwindigkeitsbegrenzung gilt, die Schwelle einem Geschwindigkeitsunterschied von beispielsweise nicht mehr als 20 km/h entsprechen. Bei anderen Ausführungsbeispielen kann der Schwellwert bzw. die Schwelle höchstens 15 km/h oder höchstens 10 km/h betragen.

Um beispielsweise eine zu häufige Korrektur wenigstens einer Manöverlinie 220 und damit einer Veränderung der Fahrstrategie 230 vorzubeugen, kann es gegebenenfalls ratsam sein, den Bereich, in dem eine Wahl des Schwellenwertes bzw. der Schwelle erlaubt ist, nach unten zu begrenzen. So kann es beispielsweise ratsam sein, diese auf eine Geschwindigkeitsdifferenz von wenigstens 2 km/h, gegebenenfalls auch auf höhere Werte, beispielsweise von wenigstens 5 km/h zu begrenzen.

Wie bereits zuvor erläutert wurde, können Geschwindigkeitsdifferenzen aus unterschiedlichen Gründen vorliegen. So kann beispielsweise auf einen Eingriff des Fahrers oder eines Abstandsreglers hin eine Anpassung der Geschwindigkeit des Fahrzeugs 200 erfolgen. Ein solcher Abstandsregler kann beispielsweise im Rahmen einer adaptiven Geschwindigkeitsregelung (ACC; Adaptive Cruise Control) aufgrund eines langsam fahrenden Objekts, beispielsweise ein vorausfahrendes Fahrzeug, erfolgen. Ebenso können die Widerstände, denen das Fahrzeug 200 ausgesetzt ist, sich verändern. Entsprechende Widerstände können beispielsweise durch die Luft, die das Fahrzeug umgibt hervorgerufen werden, also beispielsweise durch Winde oder Böen. Entsprechend können aber auch Widerstände aufgrund von Steigungen, Straßenbelagänderungen oder fahrzeugspezifischen Parametern, wie beispielsweise betriebs- oder altersbedingte Parameter im Bereich des Motors, des Getriebes und anderer Komponenten verantwortlich sein. Die Widerstände sind daher in der Praxis häufig anders, als dies theoretisch angenommen wurde.

Für den letztgenannten Fall, bei dem also die Widerstände einer Änderung unterworfen wurden, können so mithilfe unterschiedlicher Ansätze eine Korrektur der Manöverlinien 220 und eine Veränderung der Fahrstrategie 230 erzielt werden, ohne vorteilhafterweise eine direkte Messung von Luftwiderstand und anderen Parametern erforderlich zu machen. Hierdurch kann der Fahrer leichter zu dem von ihm anvisierten Ziel hingeführt werden, welches zuvor ermittelt wurde. Bei dem Ziel kann es sich beispielsweise um eine Kurve, ein Ortsschild oder einen anderen entsprechenden Punkt handeln.

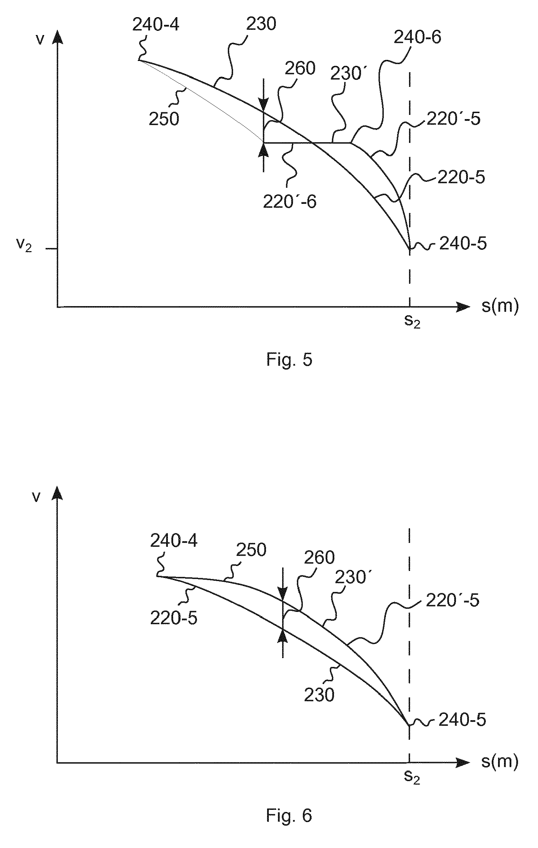

Fig. 5 illustriert eine solche Abweichung anhand des in Fig. 4 gezeigten Beispiels einer Fahrstrategie 230. So zeigt Fig. 5 einen Ausschnitt der Fahrstrategie 230 im Bereich des fünften Manöverpunkts 240-5, in den die fünfte Manöverlinie 220-5 einläuft. In Fig. 5 ist darüber hinaus ein Geschwindigkeitsverlauf 250 eingezeichnet, der einer momentanen Geschwindigkeit des Fahrzeugs 200 entspricht und aus den Bewegungsinformationen des Fahrzeugs 200 abgeleitet ist. Der Geschwindigkeitsverlauf 250 wird daher auch als reale Manöverlinie bezeichnet und weist ausgehend von dem vierten Manöverpunkt 240-4 einen steileren Verlauf als die zugehörige Manöverlinie 220-5 auf. Eine Differenz zwischen der tatsächlichen Fahrzeuggeschwindigkeit und der aus der betreffenden Fahrstrategie 230 abgeleiteten Geschwindigkeit wächst somit mit zusätzlichem Distanzparameter bzw. mit zusätzlicher Strecke s. Überschreitet diese die vorgenannte Schwelle 260, wird entsprechend wenigstens eine Manöverlinie 220 der Vielzahl von Manöverlinien auf Basis eines entsprechenden Korrekturfaktors c korrigiert. Im vorliegenden Fall kann der Korrekturfaktor c beispielsweise einem Quotienten aus einer über eine bestimmte Distanz erzielten tatsächlichen Geschwindigkeitsdifferenz, also einer aus dem dem Geschwindigkeitsverlauf 250 abgeleiteten Geschwindigkeitsdifferenz, und einer beispielsweise über die gleiche Distanz aus der Fahrstrategie 230 abgeleiteten Geschwindigkeitsdifferenz entsprechen. Er kann jedoch auch einem Inversen des vorgenannten Quotienten entsprechen.

Auf Basis des so bestimmten Korrekturfaktors kann dann beispielsweise die Manöverlinie 220-5 gemäß Gleichung (7) korrigiert werden. Mithilfe von Gleichung (7) kann so beispielsweise eine entsprechende Korrektur der Manöverlinie 220-5 erfolgen, sodass diese in die korrigierte Manöverlinie 220'-5 übergeht.

$$M'(d) = M(c \cdot d) \qquad\qquad (7)$$

Selbstverständlich können zur Korrektur der Manöverlinien 220 auch andere funktionale Zusammenhänge als der der Gleichung (7) verwendet werden. So können beispielsweise beliebige Funktionen g und f, wie diese im Zusammenhang mit Gleichung (1) beschrieben wurden, zur Korrektur der Manöverlinien 220 herangezogen werden.

Anders ausgedrückt kann auf Basis des so bestimmten Korrekturfaktors c aus der theoretisch ermittelten Manöverlinie 220-5 eine unter Berücksichtigung des Korrekturfaktors c neu ermittelte Manöverlinie 220'-5 ermittelt, die eine größere Steigung als die ursprüngliche Manöverlinie 220-5 aufweist.

Um dennoch an dem Zielort bzw. der Zielposition $s_2$, also dem fünften Manöverpunkt 240-5 ein Ankommen des Fahrzeugs 200 mit der anvisierten Zielgeschwindigkeit $v_2$ zu ermöglichen, wird nunmehr ausgehend von dem Manöverpunkt 240-5 die Fahrstrategie 230 derart verändert, sodass diese in die veränderte Fahrstrategie 230' übergeht. Da die korrigierte Manöverlinie 220'-5 steiler verläuft als die ursprüngliche Manöverlinie 220-5, also die Geschwindigkeit über eine kürzere Distanz abgebaut wird, weist die veränderte Fahrstrategie 230 eine zusätzliche Manöverlinie 220'-6 auf, die der korrigierten Manöverlinie 220'-5 vorangeht. Bei der Manöverlinie 220'-6 kann es sich beispielsweise um ein Konstantfahrmanöver handeln, welches dazu dient, einen weiteren Manöverpunkt 240-6 zu erreichen, an dem dann die veränderte Fahrstrategie 230 in die korrigierte Manöverlinie 220'-5 übergehen kann.

Anders ausgedrückt ist bei der in Fig. 5 gezeigten Situation die Geschwindigkeit des Fahrzeugs 200 kleiner als die im Rahmen der Fahrstrategie 230 theoretisch ermittelte Geschwindigkeit entlang der Wegstrecke. Bei dem hier gezeigten Ausführungsbeispiel wird dann mindestens ein Korrekturfaktor ermittelt, der den idealistischen Manöververlauf 220-5 korrigiert.

Mit dem aus der Geschwindigkeitsdifferenz bestimmten Korrekturfaktor c wird eine korrigierte Manöverlinie 220'-5 bestimmt, die die Korrektur mit einschließt und das Manöver bis zum Ziel fortführen kann. Die Korrektur der Manöverlinie kann hierbei beispielsweise auf Basis eines mathematischen Modells oder aber auch aus abgelegten Tabellenwerten erfolgen, die beispielsweise empirisch für einzelne Korrekturwerte ermittelt wurden. Hierbei kann es sein, dass das Fahrzeug 200 bis zu dieser korrigierten Manöverlinie 220'-5 durch das Konstantfahrmanöver (Manöverlinie 220'-6) weiter fährt und an einer neu bestimmten Wegstrecke, dem Manöverpunkt 240-6 das entsprechende Manöver beginnt. Bei dem Manöver kann es sich um das bereits zuvor genannten Bremsmanöver, jedoch auch um ein Schubmanöver, ein Freilaufmanöver oder ein anderes Manöver handeln.

Bei einem Ausführungsbeispiel eines Verfahrens kann, wenn beispielsweise für das theoretisch berechnete Manöver eine Freilaufphase bis zum Erreichen des Zieles berechnet wurde, die korrigierte Manöverlinie 220' beispielsweise eine Schubphase oder ein anderes Manöver zum Erreichen des Ziels umfassen, was in der ursprünglichen Fahrstrategie 230 nicht umfasst war.

Fig. 6 zeigt eine Fig. 5 ähnliche Situation, bei der jedoch der tatsächliche Geschwindigkeitsverlauf 250 oberhalb des aus der Fahrstrategie 230 ergebenden Geschwindigkeitsverlaufs liegt. Anders ausgedrückt ist bei diesem Ausführungsbeispiel die Geschwindigkeitsdifferenz größer als der theoretisch berechnete Wert, sodass das Fahrzeug 200 also schneller fährt. Auch in diesem Fall kann mithilfe eines Korrekturfaktors c eine neue Manöverlinie 220-5 bestimmt bzw. korrigiert werden. Korrekturfaktor c kann sich hierbei gegebenenfalls von dem in Fig. 5 verwendeten Korrekturfaktor unterscheiden, da in dem Fig. 5 unterliegenden Fall die tatsächliche Geschwindigkeit kleiner als die voraus berechnete war.

Bei der in Fig. 6 gezeigten Situation ist die korrigierte Manöverlinie 220'-5 einem anderen Manöver zugeordnet als die ursprüngliche Manöverlinie 220-5. Es unterscheidet sich so die korrigierte Manöverlinie 220'-5 von dem zunächst theoretisch berechneten Manöver. So kann anstelle beispielsweise eines Schubmanövers ein Freilaufmanöver oder auch ein anderes Manöver implementiert werden. Gleiches gilt selbstverständlich auch für die entgegengesetzte Richtung, sodass beispielsweise anstelle eines Freilaufmanövers ein Schubmanöver durchgeführt werden kann.

In einem solchen Fall kann beispielsweise direkt ein Umschalten der Manöver stattfinden, ohne dass das Fahrzeug wie in dem zuvor gezeigten Beispiel eine Konstantfahrt die neue Manöverlinie 220'-5 zuerst erreichen muss.

Bei den in Zusammenhang mit den Fig. 3 bis 6 beschriebenen Situationen handelt es sich selbstverständlich nur um beispielhafte Situationen. Anstelle der hier beschriebene Manöver und Fahrsituationen können im Rahmen von Ausführungsbeispielen auch andere Fahrstrategien 230 mit anderen Manöverlinien 220 angepasst werden.

Durch den Einsatz eines Ausführungsbeispiels kann so gegebenenfalls eine Verbesserung einer Fahrstrategie im Hinblick auf reale Fahrsituationen geschaffen werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | |
|---|---|
| 100 | Fahrzeugsteuergerät |
| 110 | Vergleicher |
| 120 | Schnittstelle |
| 130 | Datenverbindung |
| 140 | Korrektor |
| 150 | Manöverlinienbereitsteller |
| 160 | Veränderer |
| 200 | Fahrzeug |
| 210 | Ausgangspunkt |
| 220 | Manöverlinie |
| 230 | Fahrstrategie |
| 240 | Manöverpunkt |
| 250 | Geschwindigkeitsverlauf |
| 260 | Schwelle |
| S100 | Start |
| S110 | Vergleichen |
| S120 | Prüfen |
| S130 | Korrigieren |
| S140 | Verändern |
| S150 | Ende |
| S160 | Warten |

**Patentansprüche**

1.  Verfahren zum Verändern einer Fahrstrategie (230) für ein Fahrzeug (200), wobei die Fahrstrategie (230) auf wenigstens einer Manöverlinie (220) einer Mehrzahl von Manöverlinien basiert, wobei die Manöverlinien (220) und die Fahrstrategie (230) eine Abhängigkeit eines Bewegungsparameters als Funktion eines Distanzparameters aufweisen, umfassend:

    Vergleichen (S110) der Fahrstrategie (230) mit einer Bewegung des Fahrzeugs (200); **gekennzeichnet durch** Korrigieren (S130) wenigstens einer Manöverlinie (220) der Mehrzahl von Manöverlinien basierend auf dem Vergleich zwischen der Bewegung des Fahrzeugs (200) und der Fahrstrategie (230) und Verändern (S140) der Fahrstrategie (230) auf Basis der Mehrzahl von Manöverlinien nach dem Korrigieren (S130) wenigstens einer der Manöverlinien (220) der Mehrzahl von Manöverlinien, wenn die Bewegung des Fahrzeugs (200) und die Fahrstrategie eine vorbestimmte Bedingung erfüllen.

2.  Verfahren nach Anspruch 1, bei dem das Korrigieren (S130) der wenigstens einen Manöverlinie (220) der Mehrzahl von Manöverlinien ein Korrigieren (S130) der wenigstens einen Manöverlinie (220) auf Basis wenigstens einer linearen, polygonalen und/oder rationalen Funktion umfasst.

3. Verfahren nach einem der vorhergehenden Ansprüche, bei dem das Korrigieren (S130) der wenigstens einen Manöverlinie (220) der Mehrzahl von Manöverlinien ein Korrigieren (S130) der wenigstens einen Manöverlinie (220) auf Basis eines Korrekturfaktors umfasst, der auf einem Unterschied zwischen und/oder einem Verhältnis aus einer aus der Bewegung des Fahrzeugs (200) abgeleiteten Geschwindigkeit und einer auf Basis der Fahrstrategie (230) bestimmten Geschwindigkeit basiert, und/oder der auf einem Unterschied zwischen und/oder einem Verhältnis aus einer aus der Bewegung des Fahrzeugs (200) abgeleiteten Geschwindigkeitsdifferenz und einer auf Basis der Fahrstrategie (230) bestimmten Geschwindigkeitsdifferenz basiert.

4. Verfahren nach einem der vorhergehenden Ansprüche, bei dem das Korrigieren (S130) der wenigstens einen Manöverlinie (220) der Mehrzahl von Manöverlinien ein Korrigieren (S130) der wenigstens einen Manöverlinie (220) unter Berücksichtigen wenigstens eines vorangegangenen Korrigierens wenigstens einer Manöverlinie (220) der Mehrzahl von Manöverlinien umfasst.

5. Verfahren nach einem der vorhergehenden Ansprüche, bei dem die vorbestimmte Bedingung zwischen der Bewegung des Fahrzeugs (220) und der Fahrstrategie (230) erfüllt ist, wenn ein Unterschied zwischen und/oder ein Verhältnis aus einer aus der Bewegung des Fahrzeugs (200) abgeleiteten Geschwindigkeit und einer auf Basis der Fahrstrategie (230) bestimmten Geschwindigkeit eine vorbestimmte Schwelle (260) übersteigt.

6. Verfahren nach Anspruch 5, bei dem die Fahrstrategie (230) derart bestimmt ist, um das Fahrzeug (200) unter Berücksichtigung topografischer Daten an einem vorbestimmten Zielpunkt mit einer vorbestimmten Zielgeschwindigkeit ankommen zu lassen, wobei die vorbestimmte Schwelle (260) eine Abhängigkeit von einer Distanz zwischen dem Fahrzeug (200) und dem vorbestimmten Zielpunkt aufweist.

7. Verfahren nach einem der vorhergehenden Ansprüche, bei dem das Vergleichen (S110) ein im Wesentlichen zeitlich kontinuierliches und/oder ein im Wesentlichen zeitlich periodisches Vergleichen (S110) umfasst.

8. Verfahren nach einem der vorhergehenden Ansprüche, bei dem das Verändern (S140) der Fahrstrategie (230) derart erfolgt, um das Fahrzeug (200) an einem vorbestimmten Zielpunkt mit einer vorbestimmten Zielgeschwindigkeit ankommen zu lassen.

9. Verfahren nach Anspruch 8, bei dem das Verändern (S140) der Fahrstrategie (230) ein Bestimmen einer veränderten Fahrstrategie (230) ausgehend von dem vorbestimmten Zielpunkt und der vorbestimmten Zielgeschwindigkeit zu einer Ausgangsposition und einer an dem Ausgangspunkt vorliegenden Ausgangsgeschwindigkeit umfasst.

10. Verfahren nach einem der Ansprüche 8 oder 9, bei der das Verändern (S140) der Fahrstrategie (230) unter Berücksichtigung eines Fahrprofils einer Mehrzahl von Fahrprofilen erfolgt.

11. Verfahren nach einem der Ansprüche 8 bis 10, bei dem das Verändern (S140) der Fahrstrategie (230) bezogen auf den Distanzparameter ein vollständiges oder teilweises Aneinanderreihen wenigstens zweier unterschiedlicher Manöverlinien (220) umfasst.

12. Verfahren nach Anspruch 11, bei dem die wenigstens zwei Manöverlinien (220) unterschiedlichen Manövern einer Gruppe von Manövern zugeordnet sind, wobei die Gruppe von Manövern ein Freilaufmanöver, ein Segelmanöver, ein Schubmanöver, ein Bremsmanöver, ein Rekuperationsmanöver, ein Beschleunigungsmanöver und ein Konstantfahrmanöver umfasst.

13. Verfahren nach einem der vorhergehenden Ansprüche, bei dem der Bewegungsparameter eine Geschwindigkeit oder eine Beschleunigung des Fahrzeugs ist, und/oder bei dem der Distanzparameter eine Strecke oder eine Zeit ist, und/oder bei dem die Manöverlinien (220) der Mehrzahl von Manöverlinien jeweils einem Manöver einer Gruppe von Manövern zugeordnet sind, wobei die Gruppe von Manövern ein Freilaufmanöver, ein Segelmanöver, ein Schubmanöver, ein Bremsmanöver, ein Rekuperationsmanöver, ein Beschleunigungsmanöver und ein Konstantfahrmanöver umfasst.

14. Fahrzeugsteuergerät (100) für ein Fahrzeug (200), das ausgebildet ist, um eine Fahrstrategie (230) mit einer Bewegung des Fahrzeugs (200) vergleichen, wobei die Fahrstrategie (230) auf wenigstens einer Manöverlinie (220) einer Mehrzahl von Manöverlinien basiert, und wobei die Manöverlinien (220) und die Fahrstrategie (230) eine Abhängigkeit eines Bewegungsparameters als Funktion eines Distanzparameters aufweisen, **dadurch gekennzeichnet, dass**
das Fahrzeugsteuergerät (100) ferner ausgebildet ist, um wenigstens eine Manöverlinie (220) der Mehrzahl von Manöverlinien basierend auf dem Vergleich zwischen der Bewegung des Fahrzeugs (200) und der Fahrstrategie (230) zu korrigieren und die Fahrstrategie (230) auf Basis der Mehrzahl von Manöverlinien (220) nach dem Korrigieren wenigstens einer der Manöverlinien (220) der Mehrzahl von Manöverlinien zu verändern, wenn die Bewegung des Fahrzeugs (200) und die Fahrstrategie (230) eine vorbestimmte Bedingung erfüllen.

15. Programm mit einem Programmcode zum Durchführen eines der Verfahren gemäß einem der Ansprüche 1 bis 13, wenn der Programmcode auf einen Computer, einem Prozessor oder einer programmierbaren Hardwarekomponente ausgeführt wird.

**Claims**

1. Method for changing a driving strategy (230) for a vehicle (200), wherein the driving strategy (230) is based on at least one maneuver line (220) of a plurality of maneuver lines, wherein the maneuver lines (220) and the driving strategy (230) have a dependency on a movement parameter as a function of a distance parameter, comprising:

   comparison (S110) of the driving strategy (230) with a movement of the vehicle (200); **characterized by**
   correction (S130) of at least one maneuver line (220) of the plurality of maneuver lines based on the comparison between the movement of the vehicle (200) and the driving strategy (230) and changing (S140) the driving strategy (230) on the basis of the plurality of maneuver lines according to the correction (S130) of at least one of the maneuver lines (220) of the plurality of maneuver lines if the movement of the vehicle (200) and the driving strategy fulfill a predetermined condition.

2. Method according to Claim 1, with which the correction (S130) of the at least one maneuver line (220) of the plurality of maneuver lines comprises a correction (S130) of the at least one maneuver line (220) on the basis of at least one linear, polygonal and/or rational function.

3. Method according to any one of the preceding claims, with which the correction (S130) of the at least one maneuver line (220) of the plurality of maneuver lines comprises a correction (S130) of the at least one maneuver line (220) on the basis of a correction factor that is based on a difference between and/or a ratio of a speed derived from the movement of the vehicle (200) and a speed determined on the basis of the driving strategy (230), and/or that is based on a difference between and/or a ratio of a speed difference derived from the movement of the vehicle (200) and a speed difference determined on the basis of the driving strategy (230).

4. Method according to any one of the preceding claims, with which the correction (S130) of the at least one maneuver line (220) of the plurality of maneuver lines comprises a correction (S130) of the at least one maneuver line (220) while taking into account at least one preceding correction of at least one maneuver line (220) of the plurality of maneuver lines.

5. Method according to any one of the preceding claims, with which the predetermined condition between the movement of the vehicle (220) and the driving strategy (230) is fulfilled if a difference between and/or a ratio of a speed derived from the movement of the vehicle (200) and a speed determined on the basis of the driving strategy (230) exceeds a predetermined threshold (260).

6. Method according to Claim 5, with which the driving strategy (230) is determined in order to allow the vehicle (200) to arrive at a predetermined destination with a predetermined setpoint speed while taking into account topographical data, wherein the predetermined threshold (260) has a dependency on a distance between the vehicle (200) and the predetermined destination.

7. Method according to any one of the preceding claims, with which the comparison (S110) comprises an essentially continuous and/or an essentially periodic comparison (S110).

8. Method according to any one of the preceding claims, with which the changing (S140) of the driving strategy (230) is carried out so as to allow the vehicle (200) to arrive at a predetermined destination with a predetermined setpoint speed.

9. Method according to Claim 8, with which the changing (S140) of the driving strategy (230) comprises determining a changed driving strategy (230) starting from the predetermined destination and the predetermined setpoint speed to an initial position and an initial speed prevailing at the starting point.

10. Method according to either of Claims 8 and 9, with which the changing (S140) of the driving strategy (230) is carried out while taking into account a driving profile of a plurality of driving profiles.

11. Method according to any one of Claims 8 to 10, with which the changing (S140) of the driving strategy (230) comprises a full or partial concatenation of at least two different maneuver lines (220) in relation to the distance parameter.

12. Method according to Claim 11, with which the at least two maneuver lines (220) are associated with different maneuvers of a group of maneuvers, wherein the group of maneuvers comprises a freewheeling maneuver, a coasting maneuver, an engine-braking maneuver, a braking maneuver, an energy recovery maneuver, an acceleration maneuver and a constant speed maneuver.

13. Method according to any one of the preceding claims, with which the movement parameter is a speed or an acceleration of the vehicle, and/or with which the distance parameter is a distance or a time, and/or with which the maneuver lines (220) of the plurality of maneuver lines are each associated with a maneuver of a group of maneuvers, wherein the group of maneuvers comprises a freewheeling maneuver, a coasting maneuver, an engine-braking maneuver, a braking maneuver, an energy recovery maneuver, an acceleration maneuver and a constant speed maneuver.

14. Vehicle control device (100) for a vehicle (200), which is designed to compare a driving strategy (230) with a movement of the vehicle (200), wherein the driving strategy (230) is based on at least one maneuver line (220) of a plurality of maneuver lines, and wherein the maneuver lines (220) and the driving strategy (230) have a dependency on a movement parameter as a function of a distance parameter, **characterized in that** the vehicle control device (100) is further designed to correct at least one maneuver line (220) of the plurality of maneuver lines based on the comparison between the movement of the vehicle (200) and the driving strategy (230) and to change the driving strategy (230) on the basis of the plurality of maneuver lines (220) following the correction of at least one of the maneuver lines (220) of the plurality of maneuver lines if the movement of the vehicle (200) and the driving strategy (230) fulfill a predetermined condition.

15. Program with a program code for carrying out one of the methods according to any one of Claims 1 to 13 if the program code is implemented on a computer, a processor or a programmable hardware component.

**Revendications**

1. Procédé destiné à modifier une stratégie de conduite (230) pour un véhicule (200), la stratégie de conduite (230) étant basée sur au moins une ligne de manoeuvre (220) parmi une pluralité de lignes de manoeuvre, les lignes de manoeuvre (220) et la stratégie de conduite (230) présentant une dépendance d'un paramètre de déplacement en tant que fonction d'un paramètre de distance, comprenant :

   la comparaison (S110) de la stratégie de conduite (230) avec un déplacement du véhicule (200) ;
   **caractérisé par**
   la correction (S130) d'au moins une ligne de manoeuvre (220) parmi la pluralité de lignes de manoeuvre, basée sur la comparaison entre le déplacement du véhicule (200) et la stratégie de conduite (230) et la modification (S140) de la stratégie de conduite (230) sur la base de la pluralité de lignes de manoeuvre après la correction (S130) d'au moins l'une des lignes de manoeuvre (220) parmi la pluralité de lignes de manoeuvre si le déplacement du véhicule (200) et la stratégie de conduite satisfont à une condition prédéfinie.

2. Procédé selon la revendication 1, lors duquel la correction (S130) de l'au moins une ligne de manoeuvre (220) parmi la pluralité de lignes de manoeuvre comprend une correction (S130) de l'au moins une ligne de manoeuvre (220) sur la base d'au moins une fonction linéaire, polygonale et/ou rationnelle.

3. Procédé selon l'une quelconque des revendications précédentes, lors duquel la correction (S130) de l'au moins une ligne de manoeuvre (220) parmi la pluralité de lignes de manoeuvre comprend une correction (S130) de l'au moins une ligne de manoeuvre (220) sur la base d'un facteur de correction qui est basé sur une différence entre une vitesse dérivée du déplacement du véhicule (200) et une vitesse déterminée sur la base de la stratégie de conduite (230) et/ou un rapport qui en résulte et/ou qui est basé sur une différence entre une différence de vitesse dérivée du déplacement du véhicule (200) et une différence de vitesse déterminée sur la base de la stratégie de conduite (230) et/ou un rapport qui en résulte.

4. Procédé selon l'une quelconque des revendications précédentes, lors duquel la correction (S130) de l'au moins une ligne de manoeuvre (220) parmi la pluralité de lignes de manoeuvre comprend une correction (S130) de l'au moins une ligne de manoeuvre (220) sous considération d'au moins une correction précédente d'au moins une ligne de manoeuvre (220) parmi la pluralité de lignes de manoeuvre.

5. Procédé selon l'une quelconque des revendications précédentes, lors duquel la condition prédéfinie entre le déplacement du véhicule (220) et la stratégie de conduite (230) est satisfaite si une différence entre une vitesse dérivée du déplacement du véhicule (200) et une vitesse déterminée sur la base d'une stratégie de conduite (230) et/ou un rapport qui en résulte dépasse un seuil (260) prédéfini.

6. Procédé selon la revendication 5, lors duquel la stratégie de conduite (230) est déterminée de sorte à faire arriver le véhicule (200) sous considération de données topographiques à un point cible prédéfini, avec une vitesse cible prédéfinie, le seuil (260) prédéfini présentant une dépendance d'une distance entre le véhicule (200) et le point cible prédéfini.

7. Procédé selon l'une quelconque des revendications précédentes, lors duquel la comparaison (S110) comprend une comparaison (S110) sensiblement continue dans le temps et/ou sensiblement périodique dans le temps.

8. Procédé selon l'une quelconque des revendications précédentes, lors duquel la modification (S140) de la stratégie de conduite (230) s'effectue de sorte à faire arriver le véhicule (200) à un point cible prédéfini à une vitesse cible prédéfinie.

9. Procédé selon la revendication 8, lors duquel la modification (S140) de la stratégie de conduite (230) comprend une détermination d'une stratégie de conduite (230) modifiée en partant du point cible prédéfini et de la vitesse cible prédéfinie en une position initiale et en une vitesse initiale présente au point initial.

10. Procédé selon l'une quelconque des revendications 8 ou 9, lors duquel la modification (S140) de la stratégie de conduite (230) s'effectue sous considération d'un profil de conduite parmi une pluralité de profils de conduite.

11. Procédé selon l'une quelconque des revendications 8 à 10, lors duquel la modification (S140) de la stratégie de conduite (230) en rapport au paramètre de distance comprend une juxtaposition totale ou partielle d'au moins deux lignes de manoeuvre (220) différentes.

12. Procédé selon la revendication 11, lors duquel les au moins deux lignes de manoeuvre (220) sont affectées à différentes manoeuvres d'un groupe de manoeuvres, le groupe de manoeuvres comprenant une manoeuvre en roue libre, une manoeuvre de navigation, une manoeuvre de poussée, une manoeuvre de freinage, une manoeuvre de récupération, une manoeuvre d'accélération et une manoeuvre de conduite constante.

13. Procédé selon l'une quelconque des revendications précédentes, lors duquel le paramètre de déplacement est une vitesse ou une accélération du véhicule et/ou lors duquel le paramètre de distance est un trajet ou un temps et/ou lors duquel les lignes de manoeuvre (220) parmi la pluralité de lignes de manoeuvre sont affectées chacune à une manoeuvre d'un groupe de manoeuvres, le groupe de manoeuvres comprenant une manoeuvre en roue libre, une manoeuvre de navigation, une manoeuvre de poussée, une manoeuvre de freinage, une manoeuvre de récupération, une manoeuvre d'accélération et une manoeuvre de conduite constante.

14. Instrument de commande (100) d'un véhicule, pour un véhicule (200) qui est conçu pour comparer une stratégie de conduite (230) avec un déplacement du véhicule (200), la stratégie de conduite (230) étant basée sur au moins une ligne de manoeuvre (220) parmi une pluralité de lignes de manoeuvre et les lignes de manoeuvre (220) et la stratégie de conduite (230) présentant une dépendance d'un paramètre de déplacement en tant que fonction d'un paramètre de distance, **caractérisé en ce que** l'instrument de commande (100) de véhicule est conçu par ailleurs pour corriger au moins une ligne de manoeuvre (220) parmi la pluralité de lignes de manoeuvre sur la base de la comparaison entre le déplacement du véhicule (200) et la stratégie de conduite (230) et pour modifier la stratégie de conduite (230) sur la base de la pluralité de lignes de manoeuvre (220) après la correction d'au moins l'une des lignes de manoeuvre (220) parmi la pluralité de lignes de manoeuvre si le déplacement du véhicule (200) et la stratégie de conduite (230) satisfont à une condition prédéfinie.

**15.** Programme avec un code programme pour la réalisation de l'un des procédés selon l'une quelconque des revendications 1 à 13 lorsque le code programme est exécuté sur un ordinateur, sur un processeur ou sur un composant matériel programmable.

Fig. 1

Fig. 2a

Fig. 2b

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009021019 A1
- DE 102009057393 A1
- DE 102009040682 A1